# EUROPEAN PATENT SPECIFICATION

(11) **EP 4 574 327 B1**
(45) Date of publication and mention of the grant of the patent: **18.11.2026**
(21) Application number: 23892790.9
(22) Date of filing: 18.12.2023
(51) Int. Cl.: B23K 26/21, B23K 26/08, H01M 50/516, B23K 26/082, B23K 101/38

(54) **COORDINATE TRANSFORMATION METHOD AND WELDING SYSTEMS**
KOORDINATENTRANSFORMATIONSVERFAHREN UND SCHWEISSSYSTEME
PROCÉDÉ DE TRANSFORMATION DE COORDONNÉES ET SYSTÈMES DE SOUDAGE

(30) Priority: 08.10.2023 CN 202311290107
(43) Date of publication of application: 25.06.2025
(73) Proprietor: Contemporary Amperex Technology (Hong Kong) Limited, Central, Central And Western District (HK)
(72) Inventor: WU, Kai, Ningde, Fujian 352100 (CN); ZHAO, Jun, Ningde, Fujian 352100 (CN); JING, Zhiyong, Ningde, Fujian 352100 (CN); LUO, Jian, Ningde, Fujian 352100 (CN)
(74) Representative: Gong, Jinping
(86) International application number: PCT/CN2023/139600
(87) International publication number: WO 2025/077001

(56) References cited:
- CN-A- 109 961 479
- CN-A- 109 961 479
- CN-A- 113 628 214
- CN-A- 114 571 073
- CN-A- 114 727 219
- CN-A- 115 330 873
- CN-A- 117 001 153
- CN-A- 117 020 413
- CN-A- 117 020 414
- CN-A- 117 020 416
- JP-A- 2023 069 274
- US-A1- 2006 095 234

## Description

The present invention relates to the technical field of welding for battery products, and particularly relates to a coordinate conversion method and a welding systems, see claims 1 and 10-11 respectively.

### Background Art

New energy batteries are increasingly used in life and industry. For example, new energy vehicles equipped with batteries have been widely used. In addition, batteries are also increasingly used in the field of energy storage or the like.

Welding of posts is very important in the production process of a battery product, allowing a plurality of battery cells in the battery product to be electrically connected by means of a busbar in a cell connection system (CCS). However, in the welding process of posts, the installed CCS greatly affects the accuracy of visual photography, resulting in insufficient accuracy of the determined welding coordinates.

CN 109 961 479 A (describing the preamble of claims 1 and 10-11) shows a positioning method applied to battery module bus welding assembly line and welding assembly line using coordinate system conversion.

US 2006/095234 A1provides a method for converting between coordinate systems using a matrix.

### Summary

In view of this, the present invention provides a coordinate conversion method and welding systems, which can improve the accuracy and efficiency of determining coordinates of a post in a welding station coordinate system, thereby improving the production quality and production efficiency of a battery product. The invention is defined in the appended set of claims.

A first aspect of the present invention defines a coordinate conversion method according to claim 1, including inter alia:
obtaining a first post coordinate set of at least one post of a battery product to be welded in an addressing station coordinate system, and a first marking point coordinate set that corresponds to each of at least two marking points in the addressing station coordinate system, where the conversion parameters include a rotation parameter and a translation amount corresponding to a preset center point of rotation;
obtaining a second marking point coordinate set of the at least two marking points in a welding station coordinate system;
determining, based on the first marking point coordinate set and the second marking point coordinate set, conversion parameters of coordinates between the addressing station coordinate system and the welding station coordinate system; and
performing, based on the conversion parameters, a conversion on the first post coordinate set to obtain a second post coordinate set of the at least one post in the welding station coordinate system.

According to the coordinate conversion method according to the present invention, the conversion parameters of coordinates between the addressing station coordinate system and the welding station coordinate system can be determined quickly and accurately based on the coordinates of the at least two marking points of the battery product in the addressing station coordinate system and the welding station coordinate system, so that based on the conversion parameters, the coordinates of the post of the battery product in the addressing station coordinate system can be quickly and accurately converted to the coordinates of the post in the welding station coordinate system. There is no need for a visual system to photograph to determine the coordinates of each post in the welding station coordinate system, which can improve the accuracy and efficiency of determining the coordinates of the post in the welding station coordinate system, thereby improving the production quality and efficiency of the battery product. **In** addition, the coordinates of the post of the battery product to be welded in the addressing station coordinate system are obtained, and then the coordinates of the post in the welding station coordinate system are obtained through coordinate conversion, so that the addressing of the post coordinates and the welding of the post can be performed separately and in parallel, which can further improve the production efficiency of the battery product.

In some embodiments, the conversion parameters include a rotation parameter and a translation amount corresponding to a preset center point of rotation; and the performing, based on the conversion parameters, a conversion on the first post coordinate set to obtain a second post coordinate set of the at least one post in the welding station coordinate system includes: performing, based on the rotation parameter, a rotation on the first post coordinate set about the center point of rotation to obtain the rotated first post coordinate set; and performing, based on the translation amount, a translation on the rotated first post coordinate set to obtain the second post coordinate set.

In this way, the first post coordinate set of the at least one post of the battery product in the addressing station coordinate system can be quickly and accurately converted to the second post coordinate set of the at least one post in the welding station coordinate system.

In some embodiments, the rotation parameter includes an angle of rotation; and the performing, based on the rotation parameter, a rotation on the first post coordinate set about the center point of rotation to obtain the rotated first post coordinate set includes: determining, based on center point coordinates of the center point of rotation in the addressing station coordinate system and the first post coordinate set, a first offset coordinate set of the at least one post relative to the center point of rotation in the addressing station coordinate system; determining, based on the first offset coordinate set and the angle of rotation, a second offset coordinate set of the at least one post relative to the center point of rotation in the addressing station coordinate system; and determining, based on the second offset coordinate set and the center point coordinates, the rotated first post coordinate set.

In this way, the rotated first post coordinate set can be determined quickly and accurately.

In some embodiments, the at least one post includes a first post, the first offset coordinate set includes first offset coordinates corresponding to the first post, where the first offset coordinates include a first horizontal axis offset coordinate and a first vertical axis offset coordinate, and the second offset coordinate set includes second offset coordinates corresponding to the first post, where the second offset coordinates include a second horizontal axis offset coordinate and a second vertical axis offset coordinate; and the determining, based on the first offset coordinate set and the angle of rotation, a second offset coordinate set of the at least one post relative to the center point of rotation in the addressing station coordinate system includes: determining a first product of the first horizontal axis offset coordinate and a cosine value of the angle of rotation, and a second product of the first vertical axis offset coordinate and a sine value of the angle of rotation; determining the second horizontal axis offset coordinate based on a difference between the first product and the second product; determining a third product of the first vertical axis offset coordinate and the cosine value of the angle of rotation, and a fourth product of the first horizontal axis offset coordinate and the sine value of the angle of rotation; and determining the second vertical axis offset coordinate based on a sum of the third product and the fourth product.

In this way, the second offset coordinate set of at least one post relative to the center point of rotation in the addressing station coordinate system can be determined quickly and accurately.

In some embodiments, the at least two marking points include a first marking point and a second marking point, the first marking point coordinate set includes first marking point coordinates and second marking point coordinates that correspond to the first marking point and the second marking point, respectively, and the second marking point coordinate set includes third marking point coordinates and fourth marking point coordinates that correspond to the first marking point and the second marking point, respectively; and the determining, based on the first marking point coordinate set and the second marking point coordinate set, conversion parameters of coordinates between the addressing station coordinate system and the welding station coordinate system includes: determining, based on the first marking point coordinates, the second marking point coordinates, the third marking point coordinates, and the fourth marking point coordinates, the rotation parameter of coordinates between the addressing station coordinate system and the welding station coordinate system; performing, based on the rotation parameter, a rotation on the first marking point coordinates about the center point of rotation to obtain the rotated first marking point coordinates; and determining third offset coordinates between the third marking point coordinates and the rotated first marking point coordinates as the translation amount of coordinates between the addressing station coordinate system and the welding station coordinate system.

In this way, the rotation parameter of coordinates between the addressing station coordinate system and the welding station coordinate system as well as the translation amount corresponding to the center point of rotation can be determined quickly and accurately based on the first marking point and the second marking point.

In some embodiments, the rotation parameter includes an angle of rotation; and the determining, based on the first marking point coordinates, the second marking point coordinates, the third marking point coordinates, and the fourth marking point coordinates, the rotation parameter of coordinates between the addressing station coordinate system and the welding station coordinate system includes: determining a first slope of a first straight line based on the first marking point coordinates and the second marking point coordinates, where the first straight line is a straight line defined by the first marking point and the second marking point in the addressing station coordinate system; determining a second slope of a second straight line based on the third marking point coordinates and the fourth marking point coordinates, where the second straight line is a straight line defined by the first marking point and the second marking point in the welding station coordinate system; and determining an included angle between the first straight line and the second straight line based on the first slope and the second slope, and determining the included angle as the angle of rotation.

In this way, the angle of rotation between the addressing station coordinate system and the welding station coordinate system can be easily and quickly determined by determining the included angle between the first straight line defined by the first marking point and the second marking point in the addressing station coordinate system and the second straight line defined by the first marking point and the second marking point in the welding station coordinate system.

In some embodiments, the determining an included angle between the first straight line and the second straight line based on the first slope and the second slope includes: determining a first difference between the first slope and the second slope, and a fifth product of the first slope and the second slope; determining, based on the first difference and the fifth product, a tangent value of the included angle between the first straight line and the second straight line; and determining the included angle based on the tangent value.

In this way, the included angle between the first straight line and the second straight line can be determined quickly based on the first slope and the second slope, so that the angle of rotation between the addressing station coordinate system and the welding station coordinate system is obtained quickly.

In some embodiments, the obtaining a first post coordinate set of at least one post of a battery product to be welded in an addressing station coordinate system includes: obtaining a reference coordinate set of the at least one post of the battery product relative to a preset reference point in the addressing station coordinate system, and a first addressing offset coordinate set that is obtained by an addressing camera at an addressing station addressing and photographing the at least one post, where the addressing station coordinate system is established with the preset reference point as a coordinate origin; and determining, based on the reference coordinate set and the first addressing offset coordinate set, the first post coordinate set of the at least one post in the addressing station coordinate system.

In this way, the first post coordinate set of the at least one post of the battery product in the addressing station coordinate system can be quickly and accurately determined, so that the accuracy of the second post coordinate set obtained after coordinate conversion and the efficiency of coordinate conversion can be further improved.

In some embodiments, the preset reference point is a preset second post in the battery product; and the obtaining a reference coordinate set of the at least one post of the battery product relative to a preset reference point in the addressing station coordinate system includes: obtaining a first position at which the addressing camera is located when addressing and photographing the second post, and a set of movement distances, relative to the first position, of the addressing camera when addressing and photographing the at least one post; and determining, based on the set of movement distances and second addressing offset coordinates that are obtained by the addressing camera addressing and photographing the second post, a reference coordinate set of the at least one post relative to the second post.

In this way, the reference coordinate set of each post relative to the second post can be determined quickly and accurately based on the second addressing offset coordinates of the second post, so that the accuracy of the second post coordinate set obtained after coordinate conversion and the efficiency of coordinate conversion can be further improved.

A second aspect of the present invention defines a welding system according to claim 10, including inter alia:
a controller and a welding device, where
the controller is configured to: obtain a first post coordinate set of at least one post of a battery product to be welded in an addressing station coordinate system, and a first marking point coordinate set that corresponds to each of at least two marking points in the addressing station coordinate system; obtain a second marking point coordinate set of the at least two marking points in a welding station coordinate system; determine, based on the first marking point coordinate set and the second marking point coordinate set, conversion parameters of coordinates between the addressing station coordinate system and the welding station coordinate system; and perform, based on the conversion parameters, a conversion on the first post coordinate set to obtain a second post coordinate set of the at least one post in the welding station coordinate system, and send the second post coordinate set to the welding device, where the conversion parameters include a rotation parameter and a translation amount corresponding to a preset center point of rotation; and
the welding device is provided on a welding station and is configured to weld the at least one post based on the second post coordinate set, to electrically connect at least two battery cells in the battery product by means of a busbar.

According to the welding system of the present invention, the conversion parameters of coordinates between the addressing station coordinate system and the welding station coordinate system can be determined quickly and accurately based on the coordinates of the at least two marking points of the battery product in the addressing station coordinate system and the welding station coordinate system, so that based on the conversion parameters, the coordinates of the post of the battery product in the addressing station coordinate system can be quickly and accurately converted to the coordinates of the post in the welding station coordinate system. There is no need for a visual system to photograph to determine the coordinates of each post in the welding station coordinate system, which can improve the accuracy and efficiency of determining the coordinates of the post in the welding station coordinate system, thereby improving the production quality and efficiency of the battery product. In addition, the coordinates of the post of the battery product to be welded in the addressing station coordinate system are obtained, and then the coordinates of the post in the welding station coordinate system are obtained through coordinate conversion, so that the addressing of the post coordinates and the welding of the post can be performed separately and in parallel, which can further improve the production efficiency of the battery product.

A third aspect of the present invention defines a welding system, including inter alia:
an addressing device, a welding device, a first controller, and a second controller, where the addressing device and the first controller are provided in an addressing station, the welding device and the second controller are provided in a welding station, and the addressing station is before the welding station, where
the first controller is configured to: control the addressing device to address at least one post of a battery product to be welded and at least two marking points, to obtain a first post coordinate set of the at least one post in an addressing station coordinate system, and a first marking point coordinate set that corresponds to each of the at least two marking points in the addressing station coordinate system; and send the first post coordinate set and the first marking point coordinate set to the second controller, where the conversion parameters include a rotation parameter and a translation amount corresponding to a preset center point of rotation; and
the second controller is configured to: control the welding device to address the at least two marking points, to obtain a second marking point coordinate set of the at least two marking points in a welding station coordinate system; determine, based on the first marking point coordinate set and the second marking point coordinate set, conversion parameters of coordinates between the addressing station coordinate system and the welding station coordinate system; perform, based on the conversion parameters, a conversion on the first post coordinate set to obtain a second post coordinate set of the at least one post in the welding station coordinate system; and control the welding device to weld the at least one post based on the second post coordinate set, to electrically connect at least two battery cells in the battery product by means of a busbar.

According to this welding system of the present invention, the conversion parameters of coordinates between the addressing station coordinate system and the welding station coordinate system can be determined quickly and accurately based on the coordinates of the at least two marking points of the battery product in the addressing station coordinate system and the welding station coordinate system, so that based on the conversion parameters, the coordinates of the post of the battery product in the addressing station coordinate system can be quickly and accurately converted to the coordinates of the post in the welding station coordinate system. There is no need for a visual system to photograph to determine the coordinates of each post in the welding station coordinate system, which can improve the accuracy and efficiency of determining the coordinates of the post in the welding station coordinate system, thereby improving the production quality and efficiency of the battery product. In addition, the addressing station is provided before the welding station, the coordinates of the post of the battery product to be welded in the addressing station coordinate system are obtained in the addressing station, and then the coordinates of the post in the welding station coordinate system are obtained through coordinate conversion, so that the addressing of the post coordinates and the welding of the post can be performed separately and in parallel, which can further improve the production efficiency of the battery product.

In some embodiments, the first controller is further configured to: send a first addressing instruction to the addressing device, and obtain a first addressing offset coordinate set that is obtained by the addressing device addressing and photographing the at least one post, and a third addressing offset coordinate set that is obtained by addressing and photographing the at least two marking points; obtain a reference coordinate set of the at least one post relative to a preset reference point in the addressing station coordinate system, where the addressing station coordinate system is established with the preset reference point as a coordinate origin; determine the first post coordinate set based on the reference coordinate set and the first addressing offset coordinate set; and determine the first marking point coordinate set based on the reference coordinate set and the third addressing offset coordinate set; and
the addressing device is configured to: in response to the first addressing instruction, address and photograph the at least one post to obtain the first addressing offset coordinate set, and address and photograph the at least two marking points to obtain the third addressing offset coordinate set; and send the first addressing offset coordinate set and the third addressing offset coordinate set to the first controller.

In this way, by sending the first addressing instruction to the addressing device, the first controller can easily and quickly obtain the first addressing offset coordinate set and the third addressing offset coordinate set, so that the first post coordinate set of the at least one post of the battery product in the addressing station coordinate system can be determined quickly and accurately based on the first addressing offset coordinate set and the third addressing offset coordinate set, to further improve the accuracy of the second post coordinate set obtained after coordinate conversion and the efficiency of coordinate conversion.

In some embodiments, the second controller is further configured to: send a second addressing instruction to the welding device, and obtain the second marking point coordinate set that is obtained by the welding device addressing and photographing the at least two marking points; and
the welding device is further configured to: in response to the second addressing instruction, address and photograph the at least two marking points to obtain the second marking point coordinate set; and send the second marking point coordinate set to the second controller.

In this way, by sending the second addressing instruction to the welding device, the second controller can easily and quickly control the welding device to address and photograph the at least two marking points, to obtain the second marking point coordinate set.

In some embodiments, the second controller is further configured to: send a welding instruction to the welding device, where the welding instruction carries the second post coordinate set; and
the welding device is further configured to: in response to the welding instruction, weld the at least one post based on the second post coordinate set, to electrically connect at least two battery cells in the battery product by means of a busbar.

In this way, by sending to the welding device the welding instructions carrying the second post coordinate set, the second controller can more precisely control the welding device to weld the post in the battery product.

It should be understood that the above general description and the following detailed description are merely exemplary and illustrative, and do not limit the technical solutions of the present disclosure.

### Brief Description of the Drawings

The accompanying drawings herein are incorporated into the description and form a part of the description, and these accompanying drawings illustrate embodiments in accordance with the present disclosure, and are intended to explain technical solutions of the present disclosure together with the description.
FIG. 1 is a schematic flowchart 1 of an implementation of a coordinate conversion method;
FIG. 2 is a schematic flowchart 2 of an implementation of a coordinate conversion method;
FIG. 3 is a schematic diagram of determining second offset coordinates of a first post in a coordinate conversion method;
FIG. 4 is a schematic flowchart 3 of an implementation of a coordinate conversion method;
FIG. 5 is a schematic diagram of a deviation between a position area of a battery product in an addressing station coordinate system and a position area of the battery product in a welding station coordinate system;
FIG. 6 is a schematic structure diagram 1 of a welding system; and
FIG. 7 is a schematic structure diagram 2 of a welding system.

### Detailed Description of Embodiments

In order to make the objectives, technical solutions, and advantages of the present invention clearer, the technical solutions of the present invention are set forth below in further detail with reference to the accompanying drawings and embodiments. The described embodiments should not be considered as limitations to the present invention, and all other embodiments obtained by those of ordinary skill in the art without making inventive effort fall within the scope of protection of the present invention, as long as they are covered by the scope of the present invention defined by the appended claims.

"Some embodiments" in the following description describe a subset of all possible embodiments, but it can be understood that the "some embodiments" may be the same subset or different subsets of all the possible embodiments, and may be combined with each other without conflict.

The terms "first/second/third" are intended only to distinguish between similar objects and do not indicate a particular ordering of objects. It can be understood that "first/second/third" may be interchanged for a particular order or sequence when it permits, so that the embodiments of the present disclosure described herein can be implemented in an order other than that illustrated or described herein.

Unless otherwise defined, all technical and scientific terms used herein have the same meanings as those commonly understood by those skilled in the art to which the present disclosure pertains. The terms used herein are merely for the purpose of describing the present disclosure, but are not intended to limit the present disclosure.

At present, new energy batteries are increasingly used in life and industry. The new energy batteries are not only used in energy storage power systems such as water power, thermal power, wind power, and solar power plants, but also widely used in electric transportation means such as electric bicycles, electric motorcycles, and electric vehicles, as well as in aerospace and other fields. With the continuous expansion of the application field of traction batteries, the market demand for the traction batteries is also expanding.

A battery may be a battery cell. The battery cell is a basic unit capable of mutual conversion between chemical energy and electrical energy, and may be used to make a battery module or battery pack to supply power to an electrical apparatus. The battery cell may be a secondary battery, which is a battery cell of which active materials can be activated by means of charging for reuse after the battery cell is discharged. The battery cell may be a lithium-ion battery, a sodium-ion battery, a sodium-lithium-ion battery, a lithium-metal battery, a sodium-metal battery, a lithium-sulfur battery, a magnesium-ion battery, a nickel-hydrogen battery, a nickel-cadmium battery, a lead battery, etc., which is not limited in the embodiments of the present disclosure.

An embodiment of the present invention provides a coordinate conversion method, which may be performed by a processor of a computer device. During implementation, the computer device may be any suitable device with data processing capabilities. It can be understood that, in industrial production, the computer device may be an upper computer, such as a server, a laptop, a tablet, a desktop computer, or a smartphone, or the computer device may be a lower computer, such as an industrial computer or a programmable logic controller (PLC). In some implementations, the computer device may include a memory and a processor, where the memory stores a computer program executable on the processor, and the program, when executed by the processor, causes the coordinate conversion method to be implemented.

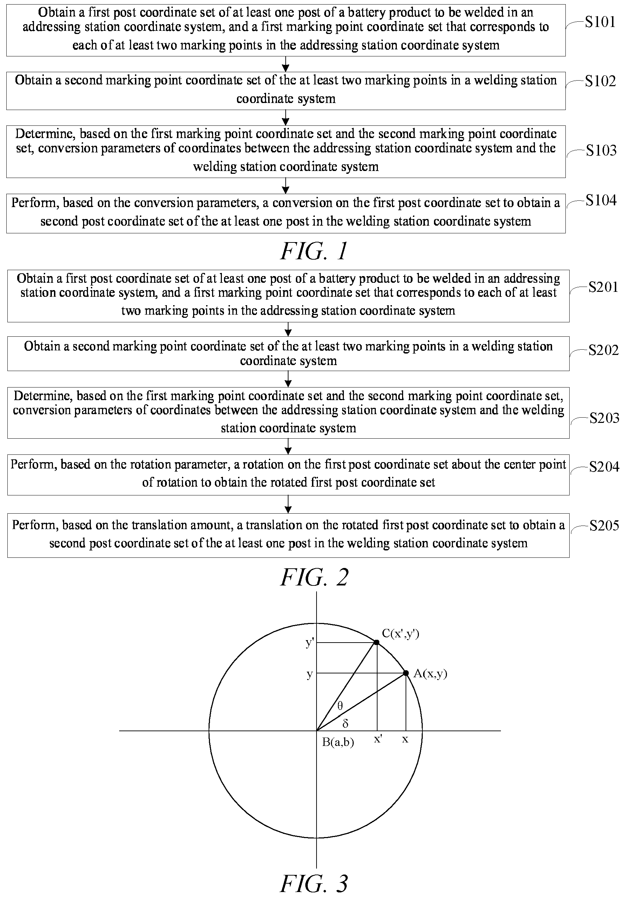

FIG. 1 is a schematic flowchart 1 of an implementation of a coordinate conversion method including the following step S101 to step S104.

Step S101: Obtain a first post coordinate set of at least one post of a battery product to be welded in an addressing station coordinate system, and a first marking point coordinate set that corresponds to each of at least two marking points in the addressing station coordinate system.

In some implementations, the conversion parameters include a rotation parameter and a translation amount corresponding to a preset center point of rotation.

Here, the battery product may include a plurality of battery cells, and each battery cell may have a positive post and a negative post. For example, the battery cell may be a cell.

In some implementations, the battery product may be a battery module composed of a plurality of battery cells. For example, the battery module may be a new energy traction battery module.

In some implementations, the battery product may be a battery pack composed of a plurality of battery cells or battery modules. For example, the battery pack may be a new energy traction battery pack.

During implementation, those skilled in the art may provide at least two marking points in the battery product according to the actual situation. A marking point may be a fixed feature point other than a post on the battery product, or a fixed feature point on a carrier carrying the battery product, which is not limited in the embodiments of the present invention.

Before posts of the battery product are welded, the at least one post of the battery product to be welded and the at least two marking points may be addressed at a pre-welding addressing station, to obtain a first post coordinate set of each post in the addressing station coordinate system and a first marking point coordinate set of each marking point in the addressing station coordinate system. The pre-welding addressing station may be a station before a welding station, and the addressing station coordinate system may be a unified coordinate system constructed for each physical position in the addressing station. With the addressing station coordinate system, it is possible to unify visual positions of the at least one post of the battery product to be welded and of the at least two marking points in the pre-welding addressing station to the same coordinate system.

During implementation, the first post coordinate set of the at least one post of the battery product in the addressing station coordinate system and the first marking point coordinate set that corresponds to each of the at least two marking points in the addressing station coordinate system may be obtained using any suitable method, which is not limited herein.

In some implementations, a line-scan camera may be used at the pre-welding addressing station to photograph and scan each post and each marking point, to obtain the first post coordinate set of the at least one post of the battery product in the addressing station coordinate system and the first marking point coordinate set of the at least two marking points in the addressing station coordinate system.

In some implementations, an area-array camera may be used at the pre-welding addressing station to address and photograph each post and each marking point, to obtain positions of each post and each marking point in their respective addressing images, and to determine the first post coordinate set of the at least one post in the addressing station coordinate system and the first marking point coordinate set of the at least two marking points in the addressing station coordinate system based on the positions of each post and each marking point in their respective addressing images and photographing positions corresponding to the area-array camera when acquiring the addressing images.

Step S102: Obtain a second marking point coordinate set of the at least two marking points in a welding station coordinate system.

Here, the at least two marking points of the battery product to be welded may be addressed at the welding station, to obtain the second marking point coordinate set of each marking point in the welding station coordinate system. The welding station coordinate system may be a unified coordinate system constructed for each physical position in the welding station. With the welding station coordinate system, it is possible to unify visual positions of the at least one post of the battery product to be welded and of the at least two marking points in the welding station to the same coordinate system.

During implementation, the marking points of the battery product may be photographed and addressed at the welding station using any suitable method, to obtain the second marking point coordinate set of the at least two marking points in the welding station coordinate system, which is not limited herein. It can be understood that, photographing and addressing the marking points of the battery product at the welding station allow for a more accurate second marking point coordinate set, because a marking point is usually a fixed feature point other than a post on the battery product, or a fixed feature point on a carrier carrying the battery product, and in the welding process of posts, the installed CCS, flexible printed circuit (FPC), and the like usually cause visual interference to an area where the posts are located, but cause relatively little interference to an area other than where the posts are located or an area of the carrier carrying the battery product.

In some implementations, a line-scan camera may be used at the welding station to photograph and scan each marking point, to obtain the second marking point coordinate set of the at least two marking points in the welding station coordinate system.

In some implementations, an area-array camera may be used at the welding station to address and photograph each marking point, to obtain a position of each marking point in a corresponding addressing image, and to determine the second marking point coordinate set of the at least two marking points in the welding station coordinate system based on the position of each marking point in the corresponding addressing image and a photographing position corresponding to the area-array camera when acquiring each addressing image.

Step S103: Determine, based on the first marking point coordinate set and the second marking point coordinate set, conversion parameters of coordinates between the addressing station coordinate system and the welding station coordinate system.

Here, coordinates in the addressing station coordinate system and coordinates in the welding station coordinate system can be converted to each other. For example, translation, rotation, scaling, and/or other processing using the conversion parameters of coordinates between the addressing station coordinate system and the welding station coordinate system can be utilized to convert the coordinates in the addressing station coordinate system to the coordinates in the welding station coordinate system, or to convert the coordinates in the welding station coordinate system to the coordinates in the addressing station coordinate system. It can be understood that, it is possible to align a position of the battery product in the addressing station coordinate system with a position of the battery product in the welding station coordinate system by converting the coordinates of each post in the battery product in the addressing station coordinate system to the coordinates of each post in the welding station coordinate system, or converting the coordinates of each post in the battery product in the welding station coordinate system to the coordinates of each post in the addressing station coordinate system.

During implementation, first marking point coordinates in the first marking point coordinate set represent positions of the at least two marking points of the battery product in the addressing station coordinate system, and second marking point coordinates in the second marking point coordinate set represent positions of the at least two marking points in the welding station coordinate system. Therefore, based on the first marking point coordinate set and the second marking point coordinate set, conversion parameters of coordinates for the at least two marking points between the addressing station coordinate system and the welding station coordinate system may be determined, and the conversion parameters of coordinates between the addressing station coordinate system and the welding station coordinate system may be determined.

In some implementations, the conversion parameters may include at least one of the following: a rotation parameter, a translation amount, or a scaling amount. The conversion parameters required to convert the coordinates of the at least two marking points in the addressing station coordinate system to the coordinates in the welding station coordinate system may be determined based on the first marking point coordinate set and the second marking point coordinate set, and the conversion parameters may be used as the conversion parameters required to convert the coordinates in the addressing station coordinate system to the coordinates in the welding station coordinate system.

Step S104: Perform, based on the conversion parameters, a conversion on the first post coordinate set to obtain a second post coordinate set of the at least one post in the welding station coordinate system.

Here, the first post coordinate set includes first coordinates of the at least one post of the battery product in the addressing station coordinate system. Therefore, based on the conversion parameters of coordinates between the addressing station coordinate system and the welding station coordinate system, a conversion may be performed on the first post coordinate set to obtain second coordinates of the at least one post in the welding station coordinate system, i.e., the second post coordinate set.

In some implementations, the conversion parameters of coordinates between the addressing station coordinate system and the welding station coordinate system include the rotation parameter. Performing a rotation on the coordinates in the addressing station coordinate system based on the rotation parameter may convert the coordinates in the addressing station coordinate system to the coordinates in the welding station coordinate system. Therefore, a rotation may be performed on the first post coordinate set based on the rotation parameter, to obtain the second post coordinate set of the at least one post in the welding station coordinate system.

In some implementations, the conversion parameters of coordinates between the addressing station coordinate system and the welding station coordinate system include the translation amount. Performing a translation on the coordinates in the addressing station coordinate system based on the translation amount may convert the coordinates in the addressing station coordinate system to the coordinates in the welding station coordinate system. Therefore, a translation may be performed on the first post coordinate set based on the translation amount, to obtain the second post coordinate set of the at least one post in the welding station coordinate system.

In some implementations, the conversion parameters of coordinates between the addressing station coordinate system and the welding station coordinate system include the rotation parameter and the translation amount corresponding to the preset center point of rotation. Performing a rotation and a translation on the coordinates in the addressing station coordinate system based on the rotation parameter and the translation amount may convert the coordinates in the addressing station coordinate system to the coordinates in the welding station coordinate system. Therefore, a rotation and a translation may be performed on the first post coordinate set based on the rotation parameter and the translation amount, to obtain the second post coordinate set of the at least one post in the welding station coordinate system. During implementation, the rotation may be first performed on the first post coordinate set based on the rotation parameter, to obtain the rotated first post coordinate set, and then the translation may be performed on the rotated first post coordinate set based on the translation amount, to obtain the second post coordinate set. Alternatively, the translation may be first performed on the first post coordinate set based on the translation amount, to obtain the translated first post coordinate set, and then the rotation may be performed on the translated first post coordinate set based on the rotation parameter, to obtain the second post coordinate set.

In this embodiment, the first post coordinate set of the at least one post of the battery product to be welded in the addressing station coordinate system, and the first marking point coordinate set that corresponds to each of the at least two marking points in the addressing station coordinate system are obtained; the second marking point coordinate set of the at least two marking points in the welding station coordinate system is obtained; the conversion parameters of coordinates between the addressing station coordinate system and the welding station coordinate system are determined based on the first marking point coordinate set and the second marking point coordinate set; and the conversion is performed on the first post coordinate set based on the conversion parameters, to obtain the second post coordinate set of the at least one post in the welding station coordinate system. In this way, the conversion parameters of coordinates between the addressing station coordinate system and the welding station coordinate system can be determined quickly and accurately based on the coordinates of the at least two marking points of the battery product in the addressing station coordinate system and the welding station coordinate system, so that based on the conversion parameters, the coordinates of the post of the battery product in the addressing station coordinate system can be quickly and accurately converted to the coordinates of the post in the welding station coordinate system. There is no need for a visual system to photograph to determine the coordinates of each post in the welding station coordinate system, which can improve the accuracy and efficiency of determining the coordinates of the post in the welding station coordinate system, thereby improving the production quality and efficiency of the battery product. In addition, the coordinates of the post of the battery product to be welded in the addressing station coordinate system are obtained, and then the coordinates of the post in the welding station coordinate system are obtained through coordinate conversion, so that the addressing of the post coordinates and the welding of the post can be performed separately and in parallel, which can further improve the production efficiency of the battery product.

In some embodiments, step S101 of obtaining a first post coordinate set of at least one post of a battery product to be welded in an addressing station coordinate system may include the following step S111 and step S112.

Step S111: Obtain a reference coordinate set of the at least one post of the battery product relative to a preset reference point in the addressing station coordinate system, and a first addressing offset coordinate set that is obtained by an addressing camera at an addressing station addressing and photographing the at least one post, where the addressing station coordinate system is established with the preset reference point as a coordinate origin.

Step S112: Determine, based on the reference coordinate set and the first addressing offset coordinate set, the first post coordinate set of the at least one post in the addressing station coordinate system.

Here, the preset reference point may be any suitable preset point in the addressing station.

In some implementations, the preset reference point may be a motion origin of a moving mechanism for driving the addressing camera at the addressing station to move for photographing. The moving mechanism may include, but is not limited to, at least one of a manipulator, a multi-axis driving platform, or the like.

In some implementations, the preset reference point may be a preset post in the battery product located in the addressing station. For example, the first post photographed by the addressing camera during the photographing and addressing process may be set as the preset reference point.

In the addressing station coordinate system, the preset reference point is the coordinate origin, i.e., coordinates of the preset reference point are (0, 0). The reference coordinate set may include reference coordinates of each post relative to the preset reference point in the addressing station coordinate system, i.e., reference coordinates of each post in the addressing station coordinate system. During implementation, the reference coordinates of each post in the addressing station coordinate system may he nredetermined based on design information of the at product, or may be manually entered, which is not limited in the embodiments of the present invention.

The addressing camera at the addressing station may be driven by the moving mechanism provided on the addressing station to move to a position above an area in which a post is located, to capture an image. Pixel coordinates of the post relative to an image origin in the image may be obtained by recognizing the post in the image. First addressing offset coordinates of the post in the addressing station coordinate system may be determined based on a pre-calibrated correspondence between a number of pixels and a physical distance. In this way, by driving the addressing camera to move to a position above an area in which each post is located to photograph and address, first addressing offset coordinates corresponding to each post may be obtained, and the first addressing offset coordinate set is obtained. In some implementations, the addressing camera at the addressing station may be an area-array camera.

It can be understood that the first addressing offset coordinates corresponding to the post may be offset coordinates of the post relative to a corresponding physical position of the image origin in the addressing station coordinate system, where the image origin may be preset according to the actual situation. For example, the image origin may be the upper left corner or the lower left corner of the image, or the center of the image, etc.

In some implementations, in the image captured at the position above the area in which a post is located, the image origin may be a reference point corresponding to reference coordinates of the post. That is, first addressing offset coordinates of the post in the addressing station coordinate system is offset coordinates of the addressing position, relative to the reference point, of the post in the addressing station coordinate system. In this way, for each post, the first post coordinates of the post in the addressing station coordinate system may be determined based on reference coordinates corresponding to the post in the reference coordinate set and first addressing offset coordinates corresponding to the post in the first addressing offset coordinate set. In this way, the first post coordinate set of the at least one post of the battery product in the addressing station coordinate system may be obtained. For example, if reference coordinates of a post relative to the preset reference point in the addressing station coordinate system are (1, 2), and first addressing offset coordinates that are obtained by the addressing camera at the addressing station addressing and photographing the post are (1, 1), then the first post coordinates of the post in the addressing station coordinate system are (2, 3).

In the above embodiment, the reference coordinate set of the at least one post of the battery product relative to the preset reference point in the addressing station coordinate system, and the first addressing offset coordinate set that is obtained by the addressing camera at the addressing station addressing and photographing the at least one post are obtained, where the addressing station coordinate system is established with the preset reference point as the coordinate origin; and the first post coordinate set of the at least one post in the addressing station coordinate system is determined based on the reference coordinate set and the first addressing offset coordinate set. In this way, the first post coordinate set of the at least one post of the battery product in the addressing station coordinate system can be quickly and accurately determined, so that the accuracy of the second post coordinate set obtained after coordinate conversion and the efficiency of coordinate conversion can be further improved.

In some embodiments, for the method of obtaining the first marking point coordinate set that corresponds to each of the at least two marking points in the battery product to be welded in the addressing station coordinate system, reference may be made to the method of obtaining the first post coordinate set of the at least one post in the addressing station coordinate system described in step S111 and step S112.

In some embodiments, the preset reference point is a preset second post in the battery product. The above step S111 may include the following step S121 and step S122.

Step S121: Obtain a first position at which the addressing camera is located when addressing and photographing the second post, and a set of movement distances, relative to the first position, of the addressing camera when addressing and photographing the at least one post.

Step S122: Determine, based on the set of movement distances and second addressing offset coordinates that are obtained by the addressing camera addressing and photographing the second post, a reference coordinate set of the at least one post relative to the second post.

Here, the second post may be any suitable preset post, which is not limited in the embodiments of the present invention. For example, the second post may be a post located in the upper left corner of the battery product, a post located in the center of the battery product, or the first post photographed by the addressing camera during the photographing and addressing process.

During the process of addressing and photographing each post of the battery product, the addressing camera needs to move to a position above the area in which the post is located to address and photograph the post. The first position is a position at which the addressing camera addresses and photographs the second post, and the second addressing offset coordinates that are obtained by the addressing camera addressing and photographing the second post at this position are the coordinate origin of the addressing station coordinate system.

The set of movement distances may include a movement distance, relative to the first position, required by the addressing camera to reach a position for addressing and photographing each post. With the first position as a reference, based on the movement distance corresponding to each post, the addressing camera may move to a position above an area in which the corresponding post is located, to address and photograph the post. During implementation, the set of movement distances may be predetermined based on the design information of the battery product, or may be manually set based on a spacing between posts in the battery product, which is not limited in the embodiments of the present invention.

In some implementations, a movement distance corresponding to each post may include a first movement distance along a horizontal axis of the addressing station coordinate system, and a second movement distance along a vertical axis of the addressing station coordinate system. For each post, movement coordinates (sx1, sy1) may be determined based on a first movement distance sx1 and a second movement distance sy1 corresponding to that post, and a difference (sx1-x0, sy1-y0) between the movement coordinates (sx1, sy1) and the second addressing offset coordinates (x0, y0) may be determined as reference coordinates of the post relative to the second post. In this way, the reference coordinate set of the at least one post relative to the second post can be obtained.

For example, the second post is the first post photographed by the addressing camera during the photographing and addressing process, first post coordinates of the second post in the addressing station coordinate system are (0, 0), and second addressing offset coordinates obtained by the addressing camera when addressing and photographing the second post are (1, 2). After photographing the second post, the addressing camera keeps unchanged in the direction of vertical axis Y of the addressing station coordinate system, moves a distance of 50 in the direction of horizontal axis X, to reach a position above an area in which a next post is located. That is, movement coordinates corresponding to the next post are (50, 0), and reference coordinates of the next post relative to the second post are (49, -2). On this basis, if first addressing offset coordinates that are obtained by the addressing camera addressing and photographing the next post are (-2, 1), then first post coordinates of the next post in the addressing station coordinate system are (47, -1).

In the above embodiment, the first position at which the addressing camera is located when addressing and photographing the second post, and the set of movement distances, relative to the first position, of the addressing camera when addressing and photographing the at least one post are obtained; and the reference coordinate set of the at least one post relative to the second post is determined based on the set of movement distances and the second addressing offset coordinates that are obtained by the addressing camera addressing and photographing the second post. In this way, the reference coordinate set of each post relative to the second post can be determined quickly and accurately based on the second addressing offset coordinates of the second post, so that the accuracy of the second post coordinate set obtained after coordinate conversion and the efficiency of coordinate conversion can be further improved.

An embodiment of the present invention provides a coordinate conversion method, which may be performed by a processor of a computer device. FIG. 2 is a schematic flowchart 2 of an implementation of a coordinate conversion method including the following step S201 to step S205.

Step S201: Obtain a first post coordinate set of at least one post of a battery product to be welded in an addressing station coordinate system, and a first marking point coordinate set that corresponds to each of at least two marking points in the addressing station coordinate system.

Step S202: Obtain a second marking point coordinate set of the at least two marking points in a welding station coordinate system.

Step S203: Determine, based on the first marking point coordinate set and the second marking point coordinate set, conversion parameters of coordinates between the addressing station coordinate system and the welding station coordinate system.

Here, step S201 to step S203 correspond to step S101 to step S103 in the foregoing embodiment, respectively, and may be implemented with reference to the forgoing step S101 to step S103.

The conversion parameters include a rotation parameter and a translation amount corresponding to a preset center point of rotation.

Step S204: Perform, based on the rotation parameter, a rotation on the first post coordinate set about the center point of rotation to obtain the rotated first post coordinate set.

Step S205: Perform, based on the translation amount, a translation on the rotated first post coordinate set to obtain a second post coordinate set of the at least one post in the welding station coordinate system.

Here, the rotation parameter may include, but is not limited to, at least one of an angle of rotation, a radian of rotation, or the like. The center point of rotation may be a fixed point preset by those skilled in the art according to the actual situation, which is not limited herein. For example, the center point of rotation may be the origin of the addressing station coordinate system, or the center point of rotation may also be a specific marking point on the battery product.

Based on the rotation parameter, a rotation may be performed on each pair of first post coordinates in the first post coordinate set about the center point of rotation, to obtain the rotated first post coordinates, and a set of rotated first post coordinates may be used as the first post coordinate set.

Since a position of the coordinate system varies after rotations about different center points of rotation, different center points of rotation usually correspond to different translation amounts. It should be noted that the translation amount may be zero or a non-zero value, which is not limited herein.

Based on the translation amount, a translation may be performed on each pair of first post coordinates in the rotated first post coordinate set, to obtain the translated first post coordinates, and a set of translated first post coordinates may be used as the second post coordinate set of each post in the welding station coordinate system.

During implementation, according to the actual situation, those skilled in the art may use any suitable geometric algorithm to determine, based on the first marking point coordinate set and the second marking point coordinate set, the rotation parameter between the addressing station coordinate system and the welding station coordinate system, and the translation amount corresponding to the preset center point of rotation, which is not limited in the embodiments of the present invention.

In this embodiment, the rotation parameter of coordinates between the addressing station coordinate system and the welding station coordinate system as well as the translation amount corresponding to the preset center point of rotation are determined based on the first marking point coordinate set and the second marking point coordinate set; based on the rotation parameter, a rotation is performed on the first post coordinate set about the center point of rotation to obtain the rotated first post coordinate set; and based on the translation amount, a translation is performed on the rotated first post coordinate set to obtain the second post coordinate set of the at least one post in the welding station coordinate system. In this way, the first post coordinate set of the at least one post of the battery product in the addressing station coordinate system can be quickly and accurately converted to the second post coordinate set of the at least one post in the welding station coordinate system.

In some embodiments, the rotation parameter includes an angle of rotation. The above step S204 may include the following step S211 to step S213.

Step S211: Determine, based on center point coordinates of the center point of rotation in the addressing station coordinate system and the first post coordinate set, a first offset coordinate set of the at least one post relative to the center point of rotation in the addressing station coordinate system.

Here, the center point coordinates are coordinates of the center point of rotation in the addressing station coordinate system.

The first offset coordinate set includes first offset coordinates of the at least one post relative to the center point of rotation in the addressing station coordinate system. First offset coordinates corresponding to a post represent a position offset amount of the post relative to the center point of rotation in the addressing station coordinate system.

In some implementations, a difference between the first post coordinates of the post and the center point coordinates may be determined as the first offset coordinates of the post relative to the center point of rotation in the addressing station coordinate system. For example, if first post coordinates of a post in the addressing station coordinate system are (x, y), and the center point coordinates are (a, b), first offset coordinates of the post are (x - a, y - b).

Step S212: Determine, based on the first offset coordinate set and the angle of rotation, a second offset coordinate set of the at least one post relative to the center point of rotation in the addressing station coordinate system.

Here, the second offset coordinate set may include second offset coordinates corresponding to the at least one post. Second offset coordinates corresponding to a post may represent a position offset amount of a rotated position of the post relative to the center point of rotation in the addressing station coordinate system.

During implementation, any suitable rotation algorithm may be used to determine, based on the angle of rotation and the first offset coordinates of the post, the second offset coordinates of the post relative to the center point of rotation in the addressing station coordinate system, thereby obtaining the second offset coordinate set.

Step S213: Determine, based on the second offset coordinate set and the center point coordinates, the rotated first post coordinate set.

Here, for each post, the rotated first post coordinates corresponding to the post may be determined based on the center point coordinates and the second offset coordinates corresponding to the post.

In some implementations, a sum of the second offset coordinates of the post and the center point coordinates may be determined as the rotated first post coordinates corresponding to the post. For example, if second offset coordinates of a post are (x' - a, y' - b) , and the center point coordinates are (a, b), the rotated first post coordinates corresponding to the post are (x', y').

In this way, the rotated first post coordinate set can be determined quickly and accurately.

In some embodiments, the at least one post includes a first post, the first offset coordinate set includes first offset coordinates corresponding to the first post, where the first offset coordinates include a first horizontal axis offset coordinate and a first vertical axis offset coordinate, and the second offset coordinate set includes second offset coordinates corresponding to the first post, where the second offset coordinates include a second horizontal axis offset coordinate and a second vertical axis offset coordinate. The above step S212 may include the following step S221 to step S224.

Step S221: Determine a first product of the first horizontal axis offset coordinate and a cosine value of the angle of rotation, and a second product of the first vertical axis offset coordinate and a sine value of the angle of rotation.

Step S222: Determine the second horizontal axis offset coordinate based on a difference between the first product and the second product.

Step S223: Determine a third product of the first vertical axis offset coordinate and the cosine value of the angle of rotation, and a fourth product of the first horizontal axis offset coordinate and the sine value of the angle of rotation.

Step S224: Determine the second vertical axis offset coordinate based on a sum of the third product and the fourth product.

Here, in the first offset coordinates of the post, the first horizontal axis offset coordinate represents a position offset amount of the post on the horizontal axis and relative to the center point of rotation in the addressing station coordinate system; and the first vertical axis offset coordinate represents a position offset amount of the post on the vertical axis and relative to the center point of rotation in the addressing station coordinate system.

In the second offset coordinates of the post, the second horizontal axis offset coordinate represents a position offset amount of a rotated position of the post on the horizontal axis and relative to the center point of rotation in the addressing station coordinate system; and the second vertical axis offset coordinate represents a position offset amount of a rotated position of the post on the vertical axis and relative to the center point of rotation in the addressing station coordinate system.

In some implementations, the second offset coordinates (x' - a, y' - b) of the first post relative to the center point of rotation in the addressing station coordinate system may be determined based on the first offset coordinates (x - a, y - b) of the first post and the angle of rotation θ, as shown in formula 1-1 below: $\left\{\begin{matrix}x ′ - a = cos \left(θ\right) ∗ \left(x-a\right) - sin \left(θ\right) ∗ \left(y-b\right) \\ y ′ - b = cos \left(θ\right) ∗ \left(y-b\right) + sin \left(θ\right) ∗ \left(x-a\right)\end{matrix}\right.$ (1-1) where x - a denotes the first horizontal axis offset coordinate, y - b denotes the first vertical axis offset coordinate, x' - a denotes the second horizontal axis offset coordinate, y' - b denotes the second vertical axis offset coordinate, cos(θ) * (x - a) denotes the first product, sin(θ) * (y - b) denotes the second product, cos(θ) * (y - b) denotes the third product, and sin(θ) * (x - a) denotes the fourth product.

FIG. 3 is a schematic diagram of determining second offset coordinates of the first post in a coordinate conversion method according to an embodiment of the present invention. As shown in FIG. 3, first post coordinates of a first post A in the addressing station coordinate system are (x, y), center point coordinates of a center point of rotation B in the addressing station coordinate system are (a, b), and an included angle between the line segment AB and the direction of horizontal axis X of the addressing station coordinate system is δ. If the first post A rotates about the center point of rotation B by an angle of θ to reach a point C, coordinates of which (i.e., the rotated first post coordinates corresponding to the first post) are (x', y'), then a distance D1 between the point A and the point B is shown in formula 1-2 below: $D 1 = \left|AB\right| = \frac{y - b}{sin \left(δ\right)} = \frac{x - a}{cos \left(δ\right)}$ (1-2)

The distance D2 between the point C and the point B is shown in formula 1-3 below: $D 2 = \left|CB\right| = \frac{y ′ - b}{sin \left(δ+θ\right)} = \frac{x ′ - a}{cos \left(δ+θ\right)}$ (1-3)

Since radii of rotation are equal, i.e., D1 = D2 = D, the following formula 1-4 holds: $D = \frac{y - b}{sin \left(δ\right)} = \frac{x - a}{cos \left(δ\right)} = \frac{y ′ - b}{sin \left(δ+θ\right)} = \frac{x ′ - a}{cos \left(δ+θ\right)}$ (1-4)

Furthermore, from the formulas for the sum and difference of two angles in trigonometry, it can be known that the following formula (1-5) holds: $\left\{\begin{matrix}sin \left(δ+θ\right) = sin \left(δ\right) cos \left(θ\right) + cos \left(δ\right) sin \left(θ\right) \\ cos \left(δ+θ\right) = cos \left(δ\right) cos \left(θ\right) - sin \left(δ\right) sin \left(θ\right)\end{matrix}\right.$ (1-5)

Therefore, x, y, x', y', a, b, δ, and θ satisfy the following formula 1-6: $\left\{\begin{matrix}x ′ - a = {D}^{∗} cos \left(δ+θ\right) = {D}^{∗} cos \left(δ\right) cos \left(θ\right) - {D}^{∗} sin \left(δ\right) sin \left(θ\right) \\ = \left(x-a\right) cos \left(θ\right) - \left(y-b\right) sin \left(θ\right) \\ y ′ - b = {D}^{∗} sin \left(δ+θ\right) = {D}^{∗} sin \left(δ\right) cos \left(θ\right) + {D}^{∗} cos \left(δ\right) sin \left(θ\right) \\ = \left(y-b\right) cos \left(θ\right) + \left(x-a\right) sin \left(θ\right)\end{matrix}\right.$ (1-6)

That is, the above formula 1-1 holds.

In some embodiments, the rotation parameter may include a radian of rotation. With reference to formula 1-7, the second offset coordinates (x' - a, y' - b) of the first post relative to the center point of rotation in the addressing station coordinate system may be determined based on the first offset coordinates (x - a, y - b) of the first post and the radian of rotation r: $\left\{\begin{matrix}x ′ - a = cos \left(2πr\right) ∗ \left(x-a\right) - sin \left(2πr\right) ∗ \left(y-b\right) \\ y ′ - b = cos \left(2πr\right) ∗ \left(y-b\right) + sin \left(2πr\right) ∗ \left(x-a\right)\end{matrix}\right.$ (1-7)

It can be understood that the radian of rotation r and the angle of rotation θ can be converted to each other based on the following formula 1-8: $r = θ ∗ \left(π/180\right)$ (1-8)

Therefore, during implementation, formula 1-1 or formula 1-7 may be selected according to the actual situation, to determine the second offset coordinates of the first post relative to the center point of rotation in the addressing station coordinate system, which is not limited in the embodiments of the present invention.

In this way, the second offset coordinate set of the at least one post relative to the center point of rotation in the addressing station coordinate system can be determined quickly and accurately.

In some embodiments, the at least two marking points include a first marking point and a second marking point, the first marking point coordinate set includes first marking point coordinates and second marking point coordinates that correspond to the first marking point and the second marking point, respectively, and the second marking point coordinate set includes third marking point coordinates and fourth marking point coordinates that correspond to the first marking point and the second marking point, respectively. The above step S203 may include the following step S231 to step S233.

Step S231: Determine, based on the first marking point coordinates, the second marking point coordinates, the third marking point coordinates, and the fourth marking point coordinates, the rotation parameter of coordinates between the addressing station coordinate system and the welding station coordinate system.

It can be understood that a first straight line that passes through the first marking point and the second marking point in the addressing station coordinate system may be determined based on the first marking point coordinates and the second marking point coordinates. A second straight line that passes through the first marking point and the second marking point in the welding station coordinate system may be determined based on the third marking point coordinates and the fourth marking point coordinates. Since a rotation relationship between the second straight line and the first straight line can reflect a rotation relationship between the addressing station coordinate system and the welding station coordinate system, the rotation parameter between the addressing station coordinate system and the welding station coordinate system may be determined based on the first marking point coordinates, the second marking point coordinates, the third marking point coordinates, and the fourth marking point coordinates.

During implementation, according to the actual situation, those skilled in the art may use any suitable geometric algorithm to determine, based on the first marking point coordinates, the second marking point coordinates, the third marking point coordinates, and the fourth marking point coordinates, the rotation parameter between the addressing station coordinate system and the welding station coordinate system, which is not limited in the embodiments of the present invention.

Step S232: Perform, based on the rotation parameter, a rotation on the first marking point coordinates about the center point of rotation to obtain the rotated first marking point coordinates.

Here, the method of performing a rotation on the first marking point coordinates is similar to the method of performing, based on the rotation parameter, a rotation on the first post coordinate set about the center point of rotation in the foregoing step S204, and may be implemented with reference to the implementation of the foregoing step S204.

Step S233: Determine third offset coordinates between the third marking point coordinates and the rotated first marking point coordinates as the translation amount of coordinates between the addressing station coordinate system and the welding station coordinate system.

In some implementations, the third offset coordinates may be determined based on the difference between the third marking point coordinates and the rotated first marking point coordinates, so that the translation amount required for translating the rotated addressing station coordinate system to be aligned with the welding station coordinate system can be obtained.

In the above embodiment, the rotation parameter between the addressing station coordinate system and the welding station coordinate system is determined based on the first marking point coordinates, the second marking point coordinates, the third marking point coordinates, and the fourth marking point coordinates; based on the rotation parameter, a rotation is performed on the first marking point coordinates about the center point of rotation to obtain the rotated first marking point coordinates; and the third offset coordinates between the third marking point coordinates and the rotated first marking point coordinates are determined as the translation amount between the addressing station coordinate system and the welding station coordinate system. In this way, the rotation parameter of coordinates between the addressing station coordinate system and the welding station coordinate system as well as the translation amount corresponding to the center point of rotation can be determined quickly and accurately based on the first marking point and the second marking point.

In some embodiments, the rotation parameter includes an angle of rotation; and the above step S231 may include the following step S241 to step S243.

Step S241: Determine a first slope of a first straight line based on the first marking point coordinates and the second marking point coordinates, where the first straight line is a straight line defined by the first marking point and the second marking point in the addressing station coordinate system.

Step S242: Determine a second slope of a second straight line based on the third marking point coordinates and the fourth marking point coordinates, where the second straight line is a straight line defined by the first marking point and the second marking point in the welding station coordinate system.

Here, from the definition of slope, it can be known that values of the first slope k1 and the second slope k2 are shown in formula 2-1 below: $\left\{\begin{matrix}k 1 = \left(y1-y2\right) / \left(x1-x2\right) \\ k 2 = \left(y3-y4\right) / \left(x3-x4\right)\end{matrix}\right.$ (2-1) where x1 and y1 are respectively the horizontal axis coordinate and the vertical axis coordinate in the first marking point coordinates, x2 and y2 are respectively the horizontal axis coordinate and the vertical axis coordinate in the second marking point coordinates, x3 and y3 are respectively the horizontal axis coordinate and the vertical axis coordinate in the third marking point coordinates, and x4 and y4 are respectively the horizontal axis coordinate and the vertical axis coordinate in the fourth marking point coordinates.

Step S243: Determine an included angle between the first straight line and the second straight line based on the first slope and the second slope, and determine the included angle as the angle of rotation.

Here, the included angle between the first straight line and the second straight line may be determined based on the first slope and the second slope using any suitable method for calculating an included angle between intersecting straight lines, which is not limited in the embodiments of the present invention.

In the above embodiment, the first slope of the first straight line is determined based on the first marking point coordinates and the second marking point coordinates; the second slope of the second straight line is determined based on the third marking point coordinates and the fourth marking point coordinates; and the included angle between the first straight line and the second straight line is determined based on the first slope and the second slope, and the included angle is determine as the angle of rotation. In this way, the angle of rotation between the addressing station coordinate system and the welding station coordinate system can be easily and quickly determined by determining the included angle between the first straight line defined by the first marking point and the second marking point in the addressing station coordinate system and the second straight line defined by the first marking point and the second marking point in the welding station coordinate system.

In some embodiments, step S243 of determining an included angle between the first straight line and the second straight line based on the first slope and the second slope may include the following step S251 to step S253.

Step S251: Determine a first difference between the first slope and the second slope, and a fifth product of the first slope and the second slope.

Step S252: Determine, based on the first difference and the fifth product, a tangent value of the included angle between the first straight line and the second straight line.

Step S253: Determine the included angle based on the tangent value.

In some implementations, the tangent value tan(θ) of the included angle θ between the first straight line and the second straight line may be determined based on the first slope k1 and the second slope k2 as per formula 2-2 below: $tan \left(θ\right) = \left|k2-k1\right| / \left(1+k1∗k2\right)$ (2-2) where k2 - k1 denotes the first difference, and k1 * k2 denotes the fifth product.

It can be understood that the first slope k1 and the second slope k2 satisfy formula 2-3 below: $\left\{\begin{matrix}k 1 = tan \left(α\right) \\ k 2 = tan \left(β\right)\end{matrix}\right.$ (2-3) where α denotes an included angle between the first straight line and the direction of horizontal axis X in the addressing station coordinate system, and β denotes an included angle between the second straight line and the direction of horizontal axis X in the welding station coordinate system. According to basic properties of trigonometric functions, the following formula 2-4 can be obtained: $tan \left(θ\right) = tan \left(β-α\right) = \left(tan\left(β\right)-tan\left(α\right)\right) / \left(1+tan\left(β\right)∗tan\left(α\right)\right)$ (2-4)

The above formula 2-2 can be obtained by combining formula 2-3 and formula 2-4.

After the tangent value of the included angle between the first straight line and the second straight line is determined, the tangent value may be subjected to an inverse tangent operation as per formula 2-5 below, to obtain the included angle θ between the first straight line and the second straight line, i.e., the angle of rotation θ between the addressing station coordinate system and the welding station coordinate system: $θ = arctan \left(\left|k2-k1\right|/\left(1+k1∗k2\right)\right)$ (2-5)

In the above embodiment, the first difference between the first slope and the second slope and the fifth product of the first slope and the second slope are determined; the tangent value of the included angle between the first straight line and the second straight line is determined based on the first difference and the fifth product; and the included angle between the first straight line and the second straight line is determined based on the tangent value. In this way, the included angle between the first straight line and the second straight line can be determined quickly based on the first slope and the second slope, so that the angle of rotation between the addressing station coordinate system and the welding station coordinate system is obtained quickly.

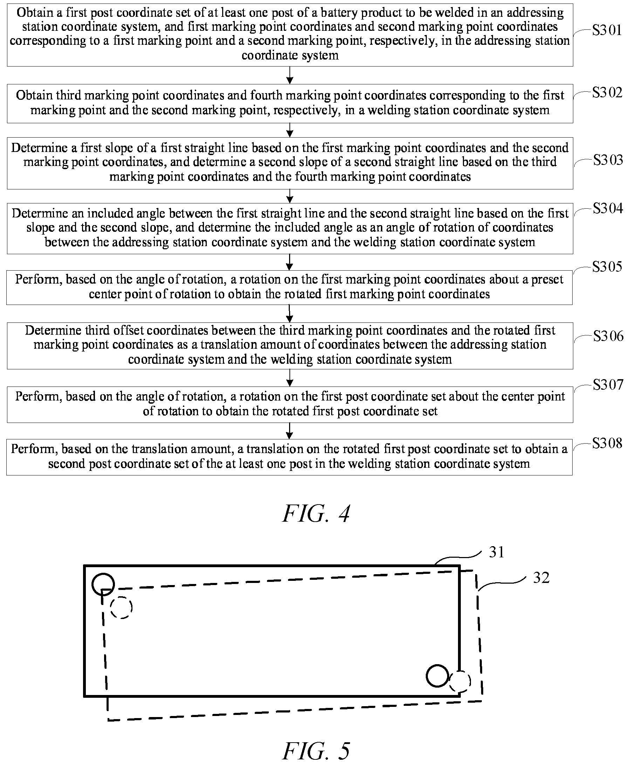

An embodiment of the present invention provides a coordinate conversion method. FIG. 4 is a schematic flowchart 3 of an implementation of a coordinate conversion method including the following step S301 to step S308:
step S301: obtaining a first post coordinate set of at least one post of a battery product to be welded in an addressing station coordinate system, and first marking point coordinates and second marking point coordinates corresponding to a first marking point and a second marking point, respectively, in the addressing station coordinate system;
step S302: obtaining third marking point coordinates and fourth marking point coordinates corresponding to the first marking point and the second marking point, respectively, in the welding station coordinate system;
step S303: determining a first slope of a first straight line based on the first marking point coordinates and the second marking point coordinates, and determining a second slope of a second straight line based on the third marking point coordinates and the fourth marking point coordinates;
step S304: determining an included angle between the first straight line and the second straight line based on the first slope and the second slope, and determining the included angle as an angle of rotation between the addressing station coordinate system and the welding station coordinate system;
step S305: performing, based on the angle of rotation, a rotation on the first marking point coordinates about a preset center point of rotation to obtain the rotated first marking point coordinates;
step S306: determining third offset coordinates between the third marking point coordinates and the rotated first marking point coordinates as a translation amount of coordinates between the addressing station coordinate system and the welding station coordinate system;
step S307: performing, based on the angle of rotation, a rotation on the first post coordinate set about the center point of rotation to obtain the rotated first post coordinate set; and
step S308: performing, based on the translation amount, a translation on the rotated first post coordinate set to obtain a second post coordinate set of the at least one post in the welding station coordinate system.

In some implementations, the conversion parameters include a rotation parameter and a translation amount corresponding to a preset center point of rotation.

In the production process of battery products, after a position of the same battery product is fixed in a pre-welding addressing station and a welding station (e.g., a busbar welding room), deviations in angle and/or translation distances may occur, resulting in a deviation between a position area 31 of the battery product in an addressing station coordinate system and a position area 32 of the battery product in a welding station coordinate system, as shown in FIG. 5. In this embodiment, by a rotation and a translation of coordinates in a coordinate system, the first post coordinate set of the at least one post of the battery product to be welded in the addressing station coordinate system may be converted to the second post coordinate set of the at least one post in the welding station coordinate system. In this way, the coordinates of the post of the battery product to be welded in the addressing station coordinate system are obtained, and then the coordinates of the post in the welding station coordinate system are obtained through a coordinate conversion, so that the addressing of the post coordinates and the welding of the post can be performed separately and in parallel. Therefore, the production efficiency of the battery product can be improved; in addition, the addressing of the post of the battery product at the pre-welding addressing station can reduce the effect of the CCS, the FPC, and other materials on an addressing visual system, to improving the accuracy of the addressing, so that the accuracy of the determined second post coordinate set can be improved.

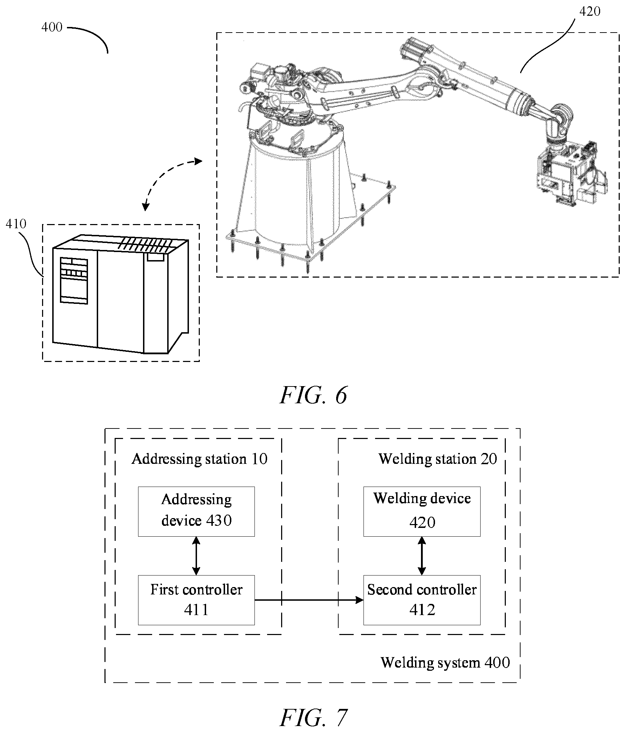

An embodiment of the present invention provides a welding system. As shown in FIG. 6, the welding system 400 includes a controller 410 and a welding device 420.

The controller 410 is configured to: obtain a first post coordinate set of at least one post of a battery product to be welded in an addressing station coordinate system, and a first marking point coordinate set that corresponds to each of at least two marking points in the addressing station coordinate system; obtain a second marking point coordinate set of the at least two marking points in a welding station coordinate system; determine, based on the first marking point coordinate set and the second marking point coordinate set, conversion parameters of coordinates between the addressing station coordinate system and the welding station coordinate system; and perform, based on the conversion parameters, a conversion on the first post coordinate set to obtain a second post coordinate set of the at least one post in the welding station coordinate system, and send the second post coordinate set to the welding device.

The welding device 420 is provided in a welding station and is configured to weld the at least one post based on the second post coordinate set, to electrically connect at least two battery cells in the battery product by means of a busbar.

Here, the controller 410 may be any suitable computer device, e.g., at least one of an upper computer, a PLC, an industrial computer, or the like.

During implementation, according to the actual situation, those skilled in the art may use any suitable welding device to weld the post, which is not limited in the embodiments of the present invention.

In some implementations, the conversion parameters include a rotation parameter and a translation amount corresponding to a preset center point of rotation.

In some implementations, the welding device may include a laser welding head, and a manipulator that drives the laser welding head to move to a corresponding position of each post for welding.

In some embodiments, the conversion parameters include a rotation parameter and a translation amount corresponding to a preset center point of rotation; and the controller 410 is further configured to: perform, based on the rotation parameter, a rotation on the first post coordinate set about the center point of rotation to obtain the rotated first post coordinate set; and perform, based on the translation amount, a translation on the rotated first post coordinate set to obtain the second post coordinate set.

In some embodiments, the rotation parameter includes an angle of rotation; and the controller 410 is further configured to: determine, based on center point coordinates of the center point of rotation in the addressing station coordinate system and the first post coordinate set, a first offset coordinate set of the at least one post relative to the center point of rotation in the addressing station coordinate system; determine, based on the first offset coordinate set and the angle of rotation, a second offset coordinate set of the at least one post relative to the center point of rotation in the addressing station coordinate system; and determine, based on the second offset coordinate set and the center point coordinates, the rotated first post coordinate set.

In some embodiments, the at least one post includes a first post, the first offset coordinate set includes first offset coordinates corresponding to the first post, where the first offset coordinates include a first horizontal axis offset coordinate and a first vertical axis offset coordinate, and the second offset coordinate set includes second offset coordinates corresponding to the first post, where the second offset coordinates include a second horizontal axis offset coordinate and a second vertical axis offset coordinate; and the controller 410 is further configured to: determine a first product of the first horizontal axis offset coordinate and a cosine value of the angle of rotation, and a second product of the first vertical axis offset coordinate and a sine value of the angle of rotation; determine the second horizontal axis offset coordinate based on a difference between the first product and the second product; determine a third product of the first vertical axis offset coordinate and the cosine value of the angle of rotation, and a fourth product of the first horizontal axis offset coordinate and the sine value of the angle of rotation; and determine the second vertical axis offset coordinate based on a sum of the third product and the fourth product.

In some embodiments, the at least two marking points include a first marking point and a second marking point, the first marking point coordinate set includes first marking point coordinates and second marking point coordinates that correspond to the first marking point and the second marking point, respectively, and the second marking point coordinate set includes third marking point coordinates and fourth marking point coordinates that correspond to the first marking point and the second marking point, respectively. The controller 410 is further configured to: determine, based on the first marking point coordinates, the second marking point coordinates, the third marking point coordinates, and the fourth marking point coordinates, the rotation parameter of coordinates between the addressing station coordinate system and the welding station coordinate system; perform, based on the rotation parameter, a rotation on the first marking point coordinates about the center point of rotation to obtain the rotated first marking point coordinates; and determine third offset coordinates between the third marking point coordinates and the rotated first marking point coordinates as the translation amount of coordinates between the addressing station coordinate system and the welding station coordinate system.

In some embodiments, the rotation parameter includes an angle of rotation; and the controller 410 is further configured to: determine a first slope of a first straight line based on the first marking point coordinates and the second marking point coordinates, where the first straight line is a straight line defined by the first marking point and the second marking point in the addressing station coordinate system; determine a second slope of a second straight line based on the third marking point coordinates and the fourth marking point coordinates, where the second straight line is a straight line defined by the first marking point and the second marking point in the welding station coordinate system; and determine an included angle between the first straight line and the second straight line based on the first slope and the second slope, and determine the included angle as the angle of rotation.

In some embodiments, the controller 410 is further configured to: determine a first difference between the first slope and the second slope, and a fifth product of the first slope and the second slope; determine, based on the first difference and the fifth product, a tangent value of the included angle between the first straight line and the second straight line; and determine the included angle based on the tangent value.

In some embodiments, the controller 410 is further configured to: obtain a reference coordinate set of the at least one post of the battery product relative to a preset reference point in the addressing station coordinate system, and a first addressing offset coordinate set that is obtained by an addressing camera at an addressing station addressing and photographing the at least one post, where the addressing station coordinate system is established with the preset reference point as a coordinate origin; and determine, based on the reference coordinate set and the first addressing offset coordinate set, the first post coordinate set of the at least one post in the addressing station coordinate system.

In some embodiments, the preset reference point is a preset second post in the battery product; and the controller 410 is further configured to: obtain a first position at which the addressing camera is located when addressing and photographing the second post, and a set of movement distances, relative to the first position, of the addressing camera when addressing and photographing the at least one post; and determine, based on the set of movement distances and second addressing offset coordinates that are obtained by the addressing camera addressing and photographing the second post, a reference coordinate set of the at least one post relative to the second post.

An embodiment of the present invention provides a welding system. As shown in FIG. 7, the welding system 400 includes an addressing device 430, a welding device 420, a first controller 411, and a second controller 412. The addressing device 430 and the first controller 411 are provided in an addressing station 10, the welding device 420 and the second controller 412 are provided in a welding station 20, and the addressing station 10 is before the welding station 20.

The first controller 411 is configured to: control the addressing device 430 to address at least one post of a battery product to be welded and at least two marking points, to obtain a first post coordinate set of the at least one post in an addressing station coordinate system, and a first marking point coordinate set that corresponds to each of the at least two marking points in the addressing station coordinate system; and send the first post coordinate set and the first marking point coordinate set to the second controller 412.

The second controller 412 is configured to: control the welding device 420 to address the at least two marking points, to obtain a second marking point coordinate set of the at least two marking points in a welding station coordinate system; determine, based on the first marking point coordinate set and the second marking point coordinate set, conversion parameters of coordinates between the addressing station coordinate system and the welding station coordinate system; perform, based on the conversion parameters, a conversion on the first post coordinate set to obtain a second post coordinate set of the at least one post in the welding station coordinate system; and control the welding device 420 to weld the at least one post based on the second post coordinate set, to electrically connect at least two battery cells in the battery product by means of a busbar.

In some implementations, the conversion parameters include a rotation parameter and a translation amount corresponding to a preset center point of rotation.

It can be understood that the welding system 400 may be used as a work station in a production line for a battery product, in which the addressing station 10 may be configured to complete a pre-welding addressing process, and the welding station 20 may be configured to complete a welding process. The addressing station 10 may be a previous station of the welding station 20, or may be a station that is before the welding station 20 and that is spaced from the welding station 20 by at least one other station.

The first controller 411 and the addressing device 430, the second controller 412 and the welding device 420, and the first controller 411 and the second controller 412 may be communicatively connected via a wired network and/or a wireless network, which is not limited in the embodiments of the present invention. In some implementations, the first controller 411 and the addressing device 430, the second controller 412 and the welding device 420, and/or the first controller 411 and the second controller 412 may communicate via industrial Ethernet. For example, industrial Ethernet may include an automation bus standard network (PROFINET) or the like.

During implementation, the first controller 411 may be a lower computer for controlling the addressing device 430, and the second controller 412 may be a lower computer for controlling the welding device 420.

In some implementations, the first controller 411 and the second controller 412 may be imnlemented together as the controller 410 in the foregoing embodiment

According to the welding system in this embodiment of the present invention, the conversion parameters of coordinates between the addressing station coordinate system and the welding station coordinate system can be determined quickly and accurately based on the coordinates of the at least two marking points of the battery product in the addressing station coordinate system and the welding station coordinate system, so that based on the conversion parameters, the coordinates of the post of the battery product in the addressing station coordinate system can be quickly and accurately converted to the coordinates of the post in the welding station coordinate system. There is no need for a visual system to photograph to determine the coordinates of each post in the welding station coordinate system, which can improve the accuracy and efficiency of determining the coordinates of the post in the welding station coordinate system, thereby improving the production quality and efficiency of the battery product. In addition, the addressing station is provided before the welding station, the coordinates of the post of the battery product to be welded in the addressing station coordinate system are obtained in the addressing station, and then the coordinates of the post in the welding station coordinate system are obtained through coordinate conversion, so that the addressing of the post coordinates and the welding of the post can be performed separately and in parallel, which can further improve the production efficiency of the battery product.

In some embodiments, the first controller 411 is further configured to: send a first addressing instruction to the addressing device 430, and obtain a first addressing offset coordinate set that is obtained by the addressing device 430 addressing and photographing the at least one post as well as a third addressing offset coordinate set that is obtained by addressing and photographing the at least two marking points; obtain a reference coordinate set of the at least one post relative to a preset reference point in the addressing station coordinate system, where the addressing station coordinate system is established with the preset reference point as a coordinate origin; determine the first post coordinate set based on the reference coordinate set and the first addressing offset coordinate set; and determine the first marking point coordinate set based on the reference coordinate set and the third addressing offset coordinate set; and
the addressing device 430 is configured to: in response to the first addressing instruction, address and photograph the at least one post to obtain the first addressing offset coordinate set, and address and photograph the at least two marking points to obtain the third addressing offset coordinate set; and send the first addressing offset coordinate set and the third addressing offset coordinate set to the first controller 411.

In this way, by sending the first addressing instruction to the addressing device 430, the first controller can easily and quickly obtain the first addressing offset coordinate set and the third addressing offset coordinate set, so that the first post coordinate set of the at least one post of the battery product in the addressing station coordinate system can be determined quickly and accurately based on the first addressing offset coordinate set and the third addressing offset coordinate set, to further improve the accuracy of the second post coordinate set obtained after coordinate conversion and the efficiency of coordinate conversion.

In some embodiments, the second controller 412 is further configured to: send a second addressing instruction to the welding device 420, and obtain the second marking point coordinate set that is obtained by the welding device 420 addressing and photographing the at least two marking points; and
the welding device 420 is further configured to: in response to the second addressing instruction, address and photograph the at least two marking points to obtain the second marking point coordinate set; and send the second marking point coordinate set to the second controller 412.

In this way, by sending the second addressing instruction to the welding device, the second controller can easily and quickly control the welding device to address and photograph the at least two marking points, to obtain the second marking point coordinate set.

In some embodiments, the second controller 412 is further configured to: send a welding instruction to the welding device 420, where the welding instruction carries the second post coordinate set; and
the welding device 420 is further configured to: in response to the welding instruction, weld the at least one post based on the second post coordinate set, to electrically connect at least two battery cells in the battery product by means of a busbar.

In this way, by sending to the welding device the welding instructions carrying the second post coordinate set, the second controller can more precisely control the welding device to weld the post in the battery product.

It should be noted here that: the description of the various embodiments above tends to emphasize the differences between the various embodiments, the similarities or likenesses of which may be cross-referenced. The above embodiments of the welding system, the description of which is similar to that of the method embodiments described above, have similar beneficial effects as the method embodiments. For technical details not disclosed in the embodiments of the welding system of the present invention, reference may be made to the description of the method embodiments of the present invention for understanding.

It should be understood that throughout the description, the expression "one embodiment" or "an embodiment" means that the specific features, structures, or characteristics associated with the embodiments are included in at least one embodiment of the present invention. Accordingly, throughout the description, the expression "in one embodiment" or "in an embodiment" do not necessarily refer to the same embodiment. Furthermore, these specific features, structures, or characteristics may be combined in one or more embodiments in any suitable manner. It should be understood that, in the embodiments of the present invention, sequence numbers of the foregoing steps/processes do not mean execution sequences. The execution sequences of the steps/processes should be determined according to functions and internal logic of the processes, and should not be construed as any limitation on the implementation processes of the embodiments of the present invention. The sequence numbers of the above embodiments of the present invention are for descriptive purposes only, and do not represent the advantages or disadvantages of the embodiments.

It should be noted that, as used herein, terms "comprise", "include", or any other variants thereof are intended to cover non-exclusive inclusion so that a process, method, article, or apparatus that includes a series of elements not only includes these very elements, but may also include other elements not expressly listed, or also include elements inherent to this process, method, article, or apparatus. Without being subject to further limitations, an element defined by a phrase "including ..." does not exclude presence of other identical elements in the process, method, article, or apparatus that includes the element.

The embodiment of the device described above is merely illustrative, e.g., the division of the described units, which is only a logical functional division, can be divided in another way when actually implemented, e.g.: A plurality of units or components may be combined, or may be integrated into another system, or some features may be ignored, or not implemented. In addition, the couplings or direct couplings or communication connections between the displayed or discussed components may be implemented through some interfaces. The indirect couplings or communication connections between the devices or units may be implemented in electronic, mechanical, or other forms.

The units illustrated above as separated components may, or may not, be physically separated, and the components shown as units may, or may not, be physical units; they may be either located in one place or distributed to a plurality of network units; and some or all of the units may be selected according to actual requirements to achieve the objectives of the solutions of the embodiments. In addition, various functional units in the various embodiments of the present invention may all be integrated into one processing unit, or each of units may be used as a single unit, or two or more units may be integrated into one unit; The above integrated units can be implemented either in the form of hardware or in the form of hardware plus software functional units.

### Industrial Applicability

According to the coordinate conversion method in the embodiments of the present invention, the conversion parameters of coordinates between the addressing station coordinate system and the welding station coordinate system can be determined quickly and accurately based on the coordinates of the at least two marking points of the battery product in the addressing station coordinate system and the welding station coordinate system, so that based on the conversion parameters, the coordinates of the post of the battery product in the addressing station coordinate system can be quickly and accurately converted to the coordinates of the post in the welding station coordinate system. There is no need for a visual system to photograph to determine the coordinates of each post in the welding station coordinate system, which can improve the accuracy and efficiency of determining the coordinates of the post in the welding station coordinate system, thereby improving the production quality and efficiency of the battery product. In addition, the coordinates of the post of the battery product to be welded in the addressing station coordinate system are obtained, and then the coordinates of the post in the welding station coordinate system are obtained through coordinate conversion, so that the addressing of the post coordinates and the welding of the post can be performed separately and in parallel, which can further improve the production efficiency of the battery product.

## Claims

1. A coordinate conversion method, comprising:
obtaining a first post coordinate set of at least one post of a battery product to be welded in an addressing station coordinate system, and a first marking point coordinate set that corresponds to each of at least two marking points in the addressing station coordinate system;
obtaining a second marking point coordinate set of the at least two marking points in a welding station coordinate system;
the method being **characterised by** the following:
determining, based on the first marking point coordinate set and the second marking point coordinate set, conversion parameters of coordinates between the addressing station coordinate system and the welding station coordinate system, wherein the conversion parameters comprise a rotation parameter and a translation amount corresponding to a preset center point of rotation; and
performing, based on the conversion parameters, a conversion on the first post coordinate set to obtain a second post coordinate set of the at least one post in the welding station coordinate system.

2. The coordinate conversion method according to claim 1, wherein
the performing, based on the conversion parameters, a conversion on the first post coordinate set to obtain a second post coordinate set of the at least one post in the welding station coordinate system comprises:
performing, based on the rotation parameter, a rotation on the first post coordinate set about the center point of rotation to obtain the rotated first post coordinate set; and
performing, based on the translation amount, a translation on the rotated first post coordinate set to obtain the second post coordinate set.

3. The coordinate conversion method according to claim 2, wherein the rotation parameter comprises an angle of rotation; and the performing, based on the rotation parameter, a rotation on the first post coordinate set about the center point of rotation to obtain the rotated first post coordinate set comprises:
determining, based on center point coordinates of the center point of rotation in the addressing station coordinate system and the first post coordinate set, a first offset coordinate set of the at least one post relative to the center point of rotation in the addressing station coordinate system;
determining, based on the first offset coordinate set and the angle of rotation, a second offset coordinate set of the at least one post relative to the center point of rotation in the addressing station coordinate system; and
determining, based on the second offset coordinate set and the center point coordinates, the rotated first post coordinate set.

4. The coordinate conversion method according to claim 3, wherein the at least one post comprises a first post, the first offset coordinate set comprises first offset coordinates corresponding to the first post, wherein the first offset coordinates comprise a first horizontal axis offset coordinate and a first vertical axis offset coordinate, and the second offset coordinate set comprises second offset coordinates corresponding to the first post, wherein the second offset coordinates comprise a second horizontal axis offset coordinate and a second vertical axis offset coordinate; and
the determining, based on the first offset coordinate set and the angle of rotation, a second offset coordinate set of the at least one post relative to the center point of rotation in the addressing station coordinate system comprises:
determining a first product of the first horizontal axis offset coordinate and a cosine value of the angle of rotation, and a second product of the first vertical axis offset coordinate and a sine value of the angle of rotation;
determining the second horizontal axis offset coordinate based on a difference between the first product and the second product;
determining a third product of the first vertical axis offset coordinate and the cosine value of the angle of rotation, and a fourth product of the first horizontal axis offset coordinate and the sine value of the angle of rotation; and
determining the second vertical axis offset coordinate based on a sum of the third product and the fourth product.

5. The coordinate conversion method according to any one of claims 2 to 4, wherein the at least two marking points comprise a first marking point and a second marking point, the first marking point coordinate set comprises first marking point coordinates and second marking point coordinates that correspond to the first marking point and the second marking point, respectively, and the second marking point coordinate set comprises third marking point coordinates and fourth marking point coordinates that correspond to the first marking point and the second marking point, respectively; and
the determining, based on the first marking point coordinate set and the second marking point coordinate set, conversion parameters of coordinates between the addressing station coordinate system and the welding station coordinate system comprises:
determining, based on the first marking point coordinates, the second marking point coordinates, the third marking point coordinates, and the fourth marking point coordinates, the rotation parameter of coordinates between the addressing station coordinate system and the welding station coordinate system;
performing, based on the rotation parameter, a rotation on the first marking point coordinates about the center point of rotation to obtain the rotated first marking point coordinates; and
determining third offset coordinates between the third marking point coordinates and the rotated first marking point coordinates as the translation amount of coordinates between the addressing station coordinate system and the welding station coordinate system.

6. The coordinate conversion method according to claim 5, wherein the rotation parameter comprises an angle of rotation; and the determining, based on the first marking point coordinates, the second marking point coordinates, the third marking point coordinates, and the fourth marking point coordinates, the rotation parameter of coordinates between the addressing station coordinate system and the welding station coordinate system comprises:
determining a first slope of a first straight line based on the first marking point coordinates and the second marking point coordinates, wherein the first straight line is a straight line defined by the first marking point and the second marking point in the addressing station coordinate system;
determining a second slope of a second straight line based on the third marking point coordinates and the fourth marking point coordinates, wherein the second straight line is a straight line defined by the first marking point and the second marking point in the welding station coordinate system; and
determining an included angle between the first straight line and the second straight line based on the first slope and the second slope, and determining the included angle as the angle of rotation.

7. The coordinate conversion method according to claim 6, wherein the determining an included angle between the first straight line and the second straight line based on the first slope and the second slope comprises:
determining a first difference between the first slope and the second slope, and a fifth product of the first slope and the second slope;
determining, based on the first difference and the fifth product, a tangent value of the included angle between the first straight line and the second straight line; and
determining the included angle based on the tangent value.

8. The coordinate conversion method according to any one of claims 1 to 7, wherein the obtaining a first post coordinate set of at least one post of a battery product to be welded in an addressing station coordinate system comprises:
obtaining a reference coordinate set of the at least one post of the battery product relative to a preset reference point in the addressing station coordinate system, and a first addressing offset coordinate set that is obtained by an addressing camera at an addressing station (10) addressing and photographing the at least one post, wherein the addressing station coordinate system is established with the preset reference point as a coordinate origin; and
determining, based on the reference coordinate set and the first addressing offset coordinate set, the first post coordinate set of the at least one post in the addressing station coordinate system.

9. The coordinate conversion method according to claim 8, wherein the preset reference point is a preset second post in the battery product; and the obtaining a reference coordinate set of the at least one post of the battery product relative to a preset reference point in the addressing station coordinate system comprises:
obtaining a first position at which the addressing camera is located when addressing and photographing the second post, and a set of movement distances, relative to the first position, of the addressing camera when addressing and photographing the at least one post; and
determining, based on the set of movement distances and second addressing offset coordinates that are obtained by the addressing camera addressing and photographing the second post, a reference coordinate set of the at least one post relative to the second post.

10. A welding system (400), comprising a controller and a welding device (420),
**characterised in that**:
the controller is configured to: obtain a first post coordinate set of at least one post of a battery product to be welded in an addressing station (10) coordinate system, and a first marking point coordinate set that corresponds to each of at least two marking points in the addressing station coordinate system; obtain a second marking point coordinate set of the at least two marking points in a welding station coordinate system; determine, based on the first marking point coordinate set and the second marking point coordinate set, conversion parameters of coordinates between the addressing station coordinate system and the welding station coordinate system; and perform, based on the conversion parameters, a conversion on the first post coordinate set to obtain a second post coordinate set of the at least one post in the welding station coordinate system, and send the second post coordinate set to the welding device (420), wherein the conversion parameters comprise a rotation parameter and a translation amount corresponding to a preset center point of rotation; and
the welding device (420) is provided in a welding station (20) and is configured to weld the at least one post based on the second post coordinate set, to electrically connect at least two battery cells in the battery product by means of a busbar.

11. A welding system (400), comprising an addressing device (430), a welding device (420), a first controller (411), and a second controller (412), wherein the addressing device (430) and the first controller (411) are provided in an addressing station (10), the welding device (420) and the second controller (412) are provided in a welding station (20), and the addressing station (10) is before the welding station (20),
**characterised in that**:
the first controller (411) is configured to: control the addressing device (430) to address at least one post of a battery product to be welded and at least two marking points, to obtain a first post coordinate set of the at least one post in an addressing station coordinate system, and a first marking point coordinate set that corresponds to each of the at least two marking points in the addressing station coordinate system; and send the first post coordinate set and the first marking point coordinate set to the second controller (412); and
the second controller (412) is configured to: control the welding device (420) to address the at least two marking points, to obtain a second marking point coordinate set of the at least two marking points in a welding station coordinate system; determine, based on the first marking point coordinate set and the second marking point coordinate set, conversion parameters of coordinates between the addressing station coordinate system and the welding station coordinate system; perform, based on the conversion parameters, a conversion on the first post coordinate set to obtain a second post coordinate set of the at least one post in the welding station coordinate system; and control the welding device (420) to weld the at least one post based on the second post coordinate set, to electrically connect at least two battery cells in the battery product by means of a busbar, wherein the conversion parameters comprise a rotation parameter and a translation amount corresponding to a preset center point of rotation.

12. The welding system (400) according to claim 11, wherein
the first controller (411) is further configured to: send a first addressing instruction to the addressing device (430), and obtain a first addressing offset coordinate set that is obtained by the addressing device (430) addressing and photographing the at least one post, and a third addressing offset coordinate set that is obtained by addressing and photographing the at least two marking points; obtain a reference coordinate set of the at least one post relative to a preset reference point in the addressing station coordinate system, wherein the addressing station coordinate system is established with the preset reference point as a coordinate origin; determine the first post coordinate set based on the reference coordinate set and the first addressing offset coordinate set; and determine the first marking point coordinate set based on the reference coordinate set and the third addressing offset coordinate set; and
the addressing device (430) is configured to: in response to the first addressing instruction, address and photograph the at least one post to obtain the first addressing offset coordinate set, and address and photograph the at least two marking points to obtain the third addressing offset coordinate set; and send the first addressing offset coordinate set and the third addressing offset coordinate set to the first controller (411).

13. The welding system (400) according to claim 11 or 12, wherein
the second controller (412) is further configured to: send a second addressing instruction to the welding device (420), and obtain the second marking point coordinate set that is obtained by the welding device (420) addressing and photographing the at least two marking points; and
the welding device (420) is further configured to: in response to the second addressing instruction, address and photograph the at least two marking points to obtain the second marking point coordinate set; and send the second marking point coordinate set to the second controller (412).

14. The welding system (400) according to any one of claims 11 to 13, wherein
the second controller (412) is further configured to: send a welding instruction to the welding device (420), wherein the welding instruction carries the second post coordinate set; and
the welding device (420) is further configured to: in response to the welding instruction, weld the at least one post based on the second post coordinate set, to electrically connect at least two battery cells in the battery product by means of a busbar.

## Patentansprüche

1. Koordinatenumwandlungsverfahren, das Folgendes umfasst:
Erhalten eines ersten Anschlusskoordinatensatzes von mindestens einem zu verschweißenden Anschluss eines Batterieprodukts in einem Adressierstationskoordinatensystem und eines ersten Markierungspunktkoordinatensatzes, der jedem von mindestens zwei Markierungspunkten in dem Adressierstationskoordinatensystem entspricht;
Erhalten eines zweiten Markierungspunktkoordinatensatzes der mindestens zwei Markierungspunkte in einem Schweißstationskoordinatensystem;
wobei das Verfahren durch Folgendes gekennzeichnet ist:
Bestimmen, basierend auf dem ersten Markierungspunktkoordinatensatz und dem zweiten Markierungspunktkoordinatensatz, von Umwandlungsparametern von Koordinaten zwischen dem Adressierstationskoordinatensystem und dem Schweißstationskoordinatensystem, wobei die Umwandlungsparameter einen Rotationsparameter und einen Translationsbetrag umfassen, der einem voreingestellten Rotationsmittelpunkt entspricht; und
Durchführen, basierend auf den Umwandlungsparametern, einer Umwandlung an dem ersten Anschlusskoordinatensatz, um einen zweiten Anschlusskoordinatensatz des mindestens einen Anschlusses in dem Schweißstationskoordinatensystem zu erhalten.

2. Koordinatenumwandlungsverfahren nach Anspruch 1, wobei
das Durchführen, basierend auf den Umwandlungsparametern, einer Umwandlung an dem ersten Anschlusskoordinatensatz, um einen zweiten Anschlusskoordinatensatz des mindestens einen Anschlusses in dem Schweißstationskoordinatensystem zu erhalten, Folgendes umfasst:
Durchführen, basierend auf dem Rotationsparameter, einer Rotation an dem ersten Anschlusskoordinatensatz um den Rotationsmittelpunkt, um den rotierten ersten Anschlusskoordinatensatz zu erhalten; und
Durchführen, basierend auf dem Translationsbetrag, einer Translation an dem rotierten ersten Anschlusskoordinatensatz, um den zweiten Anschlusskoordinatensatz zu erhalten.

3. Koordinatenumwandlungsverfahren nach Anspruch 2, wobei der Rotationsparameter einen Rotationswinkel umfasst; und wobei das Durchführen, basierend auf dem Rotationsparameter, einer Rotation an dem ersten Anschlusskoordinatensatz um den Rotationsmittelpunkt, um den rotierten ersten Anschlusskoordinatensatz zu erhalten, Folgendes umfasst:
Bestimmen, basierend auf Mittelpunktkoordinaten des Rotationsmittelpunkts in dem Adressierstationskoordinatensystem und dem ersten Anschlusskoordinatensatz, eines ersten Versatzkoordinatensatzes des mindestens einen Anschlusses relativ zu dem Rotationsmittelpunkt in dem Adressierstationskoordinatensystem;
Bestimmen, basierend auf dem ersten Versatzkoordinatensatz und dem Rotationswinkel, eines zweiten Versatzkoordinatensatzes des mindestens einen Anschlusses relativ zu dem Rotationsmittelpunkt in dem Adressierstationskoordinatensystem; und
Bestimmen, basierend auf dem zweiten Versatzkoordinatensatz und den Mittelpunktkoordinaten, des rotierten ersten Anschlusskoordinatensatzes.

4. Koordinatenumwandlungsverfahren nach Anspruch 3, wobei der mindestens eine Anschluss einen ersten Anschluss umfasst, wobei der erste Versatzkoordinatensatz erste Versatzkoordinaten umfasst, die dem ersten Anschluss entsprechen, wobei die ersten Versatzkoordinaten eine erste horizontale Achsenversatzkoordinate und eine erste vertikale Achsenversatzkoordinate umfassen, und wobei der zweite Versatzkoordinatensatz zweite Versatzkoordinaten umfasst, die dem ersten Anschluss entsprechen, wobei die zweiten Versatzkoordinaten eine zweite horizontale Achsenversatzkoordinate und eine zweite vertikale Achsenversatzkoordinate umfassen; und
wobei das Bestimmen, basierend auf dem ersten Versatzkoordinatensatz und dem Rotationswinkel, eines zweiten Versatzkoordinatensatzes des mindestens einen Anschlusses relativ zu dem Rotationsmittelpunkt in dem Adressierstationskoordinatensystem Folgendes umfasst:
Bestimmen eines ersten Produkts der ersten horizontalen Achsenversatzkoordinate und eines Kosinuswerts des Rotationswinkels und eines zweiten Produkts der ersten vertikalen Achsenversatzkoordinate und eines Sinuswerts des Rotationswinkels;
Bestimmen der zweiten horizontalen Achsenversatzkoordinate basierend auf einer Differenz zwischen dem ersten Produkt und dem zweiten Produkt;
Bestimmen eines dritten Produkts der ersten vertikalen Achsenversatzkoordinate und des Kosinuswerts des Rotationswinkels und eines vierten Produkts der ersten horizontalen Achsenversatzkoordinate und des Sinuswerts des Rotationswinkels; und
Bestimmen der zweiten vertikalen Achsenversatzkoordinate basierend auf einer Summe des dritten Produkts und des vierten Produkts.

5. Koordinatenumwandlungsverfahren nach einem der Ansprüche 2 bis 4, wobei die mindestens zwei Markierungspunkte einen ersten Markierungspunkt und einen zweiten Markierungspunkt umfassen, wobei der erste Markierungspunktkoordinatensatz erste Markierungspunktkoordinaten und zweite Markierungspunktkoordinaten umfasst, die dem ersten Markierungspunkt bzw. dem zweiten Markierungspunkt entsprechen, und wobei der zweite Markierungspunktkoordinatensatz dritte Markierungspunktkoordinaten und vierte Markierungspunktkoordinaten umfasst, die dem ersten Markierungspunkt bzw. dem zweiten Markierungspunkt entsprechen; und
wobei das Bestimmen, basierend auf dem ersten Markierungspunktkoordinatensatz und dem zweiten Markierungspunktkoordinatensatz, von Umwandlungsparametern von Koordinaten zwischen dem Adressierstationskoordinatensystem und dem Schweißstationskoordinatensystem Folgendes umfasst:
Bestimmen, basierend auf den ersten Markierungspunktkoordinaten, den zweiten Markierungspunktkoordinaten, den dritten Markierungspunktkoordinaten und den vierten Markierungspunktkoordinaten, des Rotationsparameters von Koordinaten zwischen dem Adressierstationskoordinatensystem und dem Schweißstationskoordinatensystem;
Durchführen, basierend auf dem Rotationsparameter, einer Rotation an den ersten Markierungspunktkoordinaten um den Rotationsmittelpunkt, um die rotierten ersten Markierungspunktkoordinaten zu erhalten; und
Bestimmen von dritten Versatzkoordinaten zwischen den dritten Markierungspunktkoordinaten und den rotierten ersten Markierungspunktkoordinaten als den Translationsbetrag von Koordinaten zwischen dem Adressierstationskoordinatensystem und dem Schweißstationskoordinatensystem.

6. Koordinatenumwandlungsverfahren nach Anspruch 5, wobei der Rotationsparameter einen Rotationswinkel umfasst; und wobei das Bestimmen, basierend auf den ersten Markierungspunktkoordinaten, den zweiten Markierungspunktkoordinaten, den dritten Markierungspunktkoordinaten und den vierten Markierungspunktkoordinaten, des Rotationsparameters von Koordinaten zwischen dem Adressierstationskoordinatensystem und dem Schweißstationskoordinatensystem Folgendes umfasst:
Bestimmen einer ersten Steigung einer ersten Geraden basierend auf den ersten Markierungspunktkoordinaten und den zweiten Markierungspunktkoordinaten, wobei die erste Gerade eine Gerade ist, die durch den ersten Markierungspunkt und den zweiten Markierungspunkt in dem Adressierstationskoordinatensystem definiert ist;
Bestimmen einer zweiten Steigung einer zweiten Geraden basierend auf den dritten Markierungspunktkoordinaten und den vierten Markierungspunktkoordinaten, wobei die zweite Gerade eine Gerade ist, die durch den ersten Markierungspunkt und den zweiten Markierungspunkt in dem Schweißstationskoordinatensystem definiert ist; und
Bestimmen eines eingeschlossenen Winkels zwischen der ersten Geraden und der zweiten Geraden basierend auf der ersten Steigung und der zweiten Steigung, und Bestimmen des eingeschlossenen Winkels als den Rotationswinkel.

7. Koordinatenumwandlungsverfahren nach Anspruch 6, wobei das Bestimmen eines eingeschlossenen Winkels zwischen der ersten Geraden und der zweiten Geraden basierend auf der ersten Steigung und der zweiten Steigung Folgendes umfasst:
Bestimmen einer ersten Differenz zwischen der ersten Steigung und der zweiten Steigung und eines fünften Produkts der ersten Steigung und der zweiten Steigung;
Bestimmen, basierend auf der ersten Differenz und dem fünften Produkt, eines Tangentenwerts des eingeschlossenen Winkels zwischen der ersten Geraden und der zweiten Geraden; und
Bestimmen des eingeschlossenen Winkels basierend auf dem Tangentenwert.

8. Koordinatenumwandlungsverfahren nach einem der Ansprüche 1 bis 7, wobei das Erhalten eines ersten Anschlusskoordinatensatzes von mindestens einem zu verschweißenden Anschluss eines Batterieprodukts in einem Adressierstationskoordinatensystem Folgendes umfasst:
Erhalten eines Referenzkoordinatensatzes des mindestens einen Anschlusses des Batterieprodukts relativ zu einem voreingestellten Referenzpunkt in dem Adressierstationskoordinatensystem und eines ersten Adressierversatzkoordinatensatzes, der erhalten wird, indem eine Adressierkamera an einer Adressierstation (10) den mindestens einen Anschluss adressiert und fotografiert, wobei das Adressierstationskoordinatensystem mit dem voreingestellten Referenzpunkt als Koordinatenursprung eingerichtet ist; und
Bestimmen, basierend auf dem Referenzkoordinatensatz und dem ersten Adressierversatzkoordinatensatz, des ersten Anschlusskoordinatensatzes des mindestens einen Anschlusses in dem Adressierstationskoordinatensystem.

9. Koordinatenumwandlungsverfahren nach Anspruch 8, wobei der voreingestellte Referenzpunkt ein voreingestellter zweiter Anschluss in dem Batterieprodukt ist; und wobei das Erhalten eines Referenzkoordinatensatzes des mindestens einen Anschlusses des Batterieprodukts relativ zu einem voreingestellten Referenzpunkt in dem Adressierstationskoordinatensystem Folgendes umfasst:
Erhalten einer ersten Position, an der sich die Adressierkamera beim Adressieren und Fotografieren des zweiten Anschlusses befindet, und eines Satzes von Bewegungsdistanzen der Adressierkamera relativ zu der ersten Position beim Adressieren und Fotografieren des mindestens einen Anschlusses; und
Bestimmen, basierend auf dem Satz von Bewegungsdistanzen und zweiten Adressierversatzkoordinaten, die erhalten werden, indem die Adressierkamera den zweiten Anschluss adressiert und fotografiert, eines Referenzkoordinatensatzes des mindestens einen Anschlusses relativ zu dem zweiten Anschluss.

10. Schweißsystem (400), das eine Steuerung und eine Schweißvorrichtung (420) umfasst, **dadurch gekennzeichnet, dass**:
die Steuerung zu Folgendem ausgelegt ist: Erhalten eines ersten Anschlusskoordinatensatzes von mindestens einem zu verschweißenden Anschluss eines Batterieprodukts in einem Adressierstations(10)-Koordinatensystem und eines ersten Markierungspunktkoordinatensatzes, der jedem von mindestens zwei Markierungspunkten in dem Adressierstationskoordinatensystem entspricht; Erhalten eines zweiten Markierungspunktkoordinatensatzes der mindestens zwei Markierungspunkte in einem Schweißstationskoordinatensystem; Bestimmen, basierend auf dem ersten Markierungspunktkoordinatensatz und dem zweiten Markierungspunktkoordinatensatz, von Umwandlungsparametern von Koordinaten zwischen dem Adressierstationskoordinatensystem und dem Schweißstationskoordinatensystem; und
Durchführen, basierend auf den Umwandlungsparametern, einer Umwandlung an dem ersten Anschlusskoordinatensatz, um einen zweiten Anschlusskoordinatensatz des mindestens einen Anschlusses in dem Schweißstationskoordinatensystem zu erhalten, und Senden des zweiten Anschlusskoordinatensatzes an die Schweißvorrichtung (420), wobei die Umwandlungsparameter einen Rotationsparameter und einen Translationsbetrag umfassen, der einem voreingestellten Rotationsmittelpunkt entspricht; und
die Schweißvorrichtung (420) in einer Schweißstation (20) bereitgestellt und dazu ausgelegt ist, den mindestens einen Anschluss basierend auf dem zweiten Anschlusskoordinatensatz zu verschweißen, um mindestens zwei Batteriezellen in dem Batterieprodukt mittels einer Sammelschiene elektrisch zu verbinden.

11. Schweißsystem (400), umfassend eine Adressiervorrichtung (430), eine Schweißvorrichtung (420), eine erste Steuerung (411) und eine zweite Steuerung (412), wobei die Adressiervorrichtung (430) und die erste Steuerung (411) in einer Adressierstation (10) bereitgestellt sind, die Schweißvorrichtung (420) und die zweite Steuerung (412) in einer Schweißstation (20) bereitgestellt sind und sich die Adressierstation (10) vor der Schweißstation (20) befindet, **dadurch gekennzeichnet, dass**:
die erste Steuerung (411) zu Folgendem ausgelegt ist: Steuern der Adressiervorrichtung (430) zum Adressieren mindestens eines zu verschweißenden Anschlusses eines Batterieprodukts und mindestens zweier Markierungspunkte, um einen ersten Anschlusskoordinatensatz des mindestens einen Anschlusses in einem Adressierstationskoordinatensystem und einen ersten Markierungspunktkoordinatensatz zu erhalten, der jedem der mindestens zwei Markierungspunkte in dem Adressierstationskoordinatensystem entspricht; und Senden des ersten Anschlusskoordinatensatzes und des ersten Markierungspunktkoordinatensatzes an die zweite Steuerung (412); und
die zweite Steuerung (412) zu Folgendem ausgelegt ist: Steuern der Schweißvorrichtung (420) zum Adressieren der mindestens zwei Markierungspunkte, um einen zweiten Markierungspunktkoordinatensatz der mindestens zwei Markierungspunkte in einem Schweißstationskoordinatensystem zu erhalten; Bestimmen, basierend auf dem ersten Markierungspunktkoordinatensatz und dem zweiten Markierungspunktkoordinatensatz, von Umwandlungsparametern von Koordinaten zwischen dem Adressierstationskoordinatensystem und dem Schweißstationskoordinatensystem; Durchführen, basierend auf den Umwandlungsparametern, einer Umwandlung an dem ersten Anschlusskoordinatensatz, um einen zweiten Anschlusskoordinatensatz des mindestens einen Anschlusses in dem Schweißstationskoordinatensystem zu erhalten; und Steuern der Schweißvorrichtung (420) zum Verschweißen des mindestens einen Anschlusses basierend auf dem zweiten Anschlusskoordinatensatz, um mindestens zwei Batteriezellen in dem Batterieprodukt mittels einer Sammelschiene elektrisch zu verbinden, wobei die Umwandlungsparameter einen Rotationsparameter und einen Translationsbetrag umfassen, der einem voreingestellten Rotationsmittelpunkt entspricht.

12. Schweißsystem (400) nach Anspruch 11, wobei
die erste Steuerung (411) ferner zu Folgendem ausgelegt ist: Senden einer ersten Adressieranweisung an die Adressiervorrichtung (430) und Erhalten eines ersten Adressierversatzkoordinatensatzes, der erhalten wird, indem die Adressiervorrichtung (430) den mindestens einen Anschluss adressiert und fotografiert, und eines dritten Adressierversatzkoordinatensatzes, der erhalten wird, indem die mindestens zwei Markierungspunkte adressiert und fotografiert werden; Erhalten eines Referenzkoordinatensatzes des mindestens einen Anschlusses relativ zu einem voreingestellten Referenzpunkt in dem Adressierstationskoordinatensystem, wobei das Adressierstationskoordinatensystem mit dem voreingestellten Referenzpunkt als Koordinatenursprung eingerichtet ist; Bestimmen des ersten Anschlusskoordinatensatzes basierend auf dem Referenzkoordinatensatz und dem ersten Adressierversatzkoordinatensatz; und Bestimmen des ersten Markierungspunktkoordinatensatzes basierend auf dem Referenzkoordinatensatz und dem dritten Adressierversatzkoordinatensatz; und die Adressiervorrichtung (430) zu Folgendem ausgelegt ist: als Reaktion auf die erste Adressieranweisung, Adressieren und Fotografieren des mindestens einen Anschlusses, um den ersten Adressierversatzkoordinatensatz zu erhalten, und Adressieren und Fotografieren der mindestens zwei Markierungspunkte, um den dritten Adressierversatzkoordinatensatz zu erhalten; und Senden des ersten Adressierversatzkoordinatensatzes und des dritten Adressierversatzkoordinatensatzes an die erste Steuerung (411).

13. Schweißsystem (400) nach Anspruch 11 oder 12, wobei
die zweite Steuerung (412) ferner zu Folgendem ausgelegt ist: Senden einer zweiten Adressieranweisung an die Schweißvorrichtung (420), und Erhalten des zweiten Markierungspunktkoordinatensatzes, der erhalten wird, indem die Schweißvorrichtung (420) die mindestens zwei Markierungspunkte adressiert und fotografiert; und
die Schweißvorrichtung (420) ferner zu Folgendem ausgelegt ist: als Reaktion auf die zweite Adressieranweisung, Adressieren und Fotografieren der mindestens zwei Markierungspunkte, um den zweiten Markierungspunktkoordinatensatz zu erhalten; und Senden des zweiten Markierungspunktkoordinatensatzes an die zweite Steuerung (412).

14. Schweißsystem (400) nach einem der Ansprüche 11 bis 13, wobei
die zweite Steuerung (412) ferner zu Folgendem ausgelegt ist: Senden einer Schweißanweisung an die Schweißvorrichtung (420), wobei die Schweißanweisung den zweiten Anschlusskoordinatensatz enthält; und
die Schweißvorrichtung (420) ferner zu Folgendem ausgelegt ist: als Reaktion auf die Schweißanweisung, Verschweißen des mindestens einen Anschlusses basierend auf dem zweiten Anschlusskoordinatensatz, um mindestens zwei Batteriezellen in dem Batterieprodukt mittels einer Sammelschiene elektrisch zu verbinden.

## Revendications

1. Procédé de conversion de coordonnées, comprenant :
l'obtention d'un premier ensemble de coordonnées de borne d'au moins une borne d'un produit de batterie à souder dans un système de coordonnées de poste d'adressage, et d'un premier ensemble de coordonnées de point de marquage qui correspond à chacun d'au moins deux points de marquage dans le système de coordonnées du poste d'adressage ;
l'obtention d'un deuxième ensemble de coordonnées de point de marquage des au moins deux points de marquage dans un système de coordonnées du poste de soudage ;
le procédé étant **caractérisé par** ce qui suit :
la détermination, sur la base du premier ensemble de coordonnées de point de marquage et du deuxième ensemble de coordonnées de point de marquage, de paramètres de conversion de coordonnées entre le système de coordonnées du poste d'adressage et le système de coordonnées du poste de soudage, les paramètres de conversion comprenant un paramètre de rotation et une quantité de translation correspondant à un point central de rotation prédéfini ; et
l'exécution, sur la base des paramètres de conversion, d'une conversion sur le premier ensemble de coordonnées de borne pour obtenir un deuxième ensemble de coordonnées de borne de l'au moins une borne dans le système de coordonnées du poste de soudage.

2. Procédé de conversion de coordonnées selon la revendication 1, dans lequel
la réalisation, sur la base des paramètres de conversion, d'une conversion sur le premier ensemble de coordonnées de borne pour obtenir un deuxième ensemble de coordonnées de borne de l'au moins une borne dans le système de coordonnées du poste de soudage comprend :
l'exécution, sur la base du paramètre de rotation, d'une rotation sur le premier ensemble de coordonnées de borne autour du point central de rotation pour obtenir le premier ensemble de coordonnées de borne pivotées ; et
l'exécution, sur la base de la quantité de translation, d'une translation sur le premier ensemble de coordonnées de borne pivotées pour obtenir le deuxième ensemble de coordonnées de borne.

3. Procédé de conversion de coordonnées selon la revendication 2, dans lequel le paramètre de rotation comprend un angle de rotation ; et l'exécution, sur la base du paramètre de rotation, d'une rotation sur le premier ensemble de coordonnées de borne autour du point central de rotation pour obtenir le premier ensemble de coordonnées de borne pivotées comprend :
la détermination, sur la base des coordonnées de point central du point central de rotation dans le système de coordonnées du poste d'adressage et du premier ensemble de coordonnées de borne, d'un premier ensemble de coordonnées décalées de l'au moins une borne par rapport au point central de rotation dans le système de coordonnées du poste d'adressage ;
la détermination, sur la base du premier ensemble de coordonnées décalées et de l'angle de rotation, d'un deuxième ensemble de coordonnées décalées de l'au moins une borne par rapport au point central de rotation dans le système de coordonnées du poste d'adressage ; et
la détermination, sur la base du deuxième ensemble de coordonnées décalées et des coordonnées du point central, du premier ensemble de coordonnées de borne pivotées.

4. Procédé de conversion de coordonnées selon la revendication 3, dans lequel l'au moins une borne comprend une première borne, le premier ensemble de coordonnées décalées comprend des premières coordonnées décalées correspondant à la première borne, les premières coordonnées décalées comprenant une première coordonnée décalée sur l'axe horizontal et une première coordonnée décalée sur l'axe vertical, et le deuxième ensemble de coordonnées décalées comprenant des deuxièmes coordonnées décalées correspondant à la première borne, les deuxièmes coordonnées décalées comprenant une deuxième coordonnée décalée sur l'axe horizontal et une deuxième coordonnée décalée sur l'axe vertical ; et
la détermination, sur la base du premier ensemble de coordonnées décalées et de l'angle de rotation, d'un deuxième ensemble de coordonnées décalées de l'au moins une borne par rapport au point central de rotation dans le système de coordonnées du poste d'adressage comprend :
la détermination d'un premier produit de la première coordonnée décalée sur l'axe horizontal avec une valeur en cosinus de l'angle de rotation, et d'un deuxième produit de la première coordonnée décalée sur l'axe vertical avec une valeur en sinus de l'angle de rotation ;
la détermination de la deuxième coordonnée décalée sur l'axe horizontal sur la base d'une différence entre le premier produit et le deuxième produit ;
la détermination d'un troisième produit de la première coordonnée décalée sur l'axe vertical avec la valeur en cosinus de l'angle de rotation, et d'un quatrième produit de la première coordonnée décalée sur l'axe horizontal avec la valeur en sinus de l'angle de rotation ; et
la détermination de la deuxième coordonnée décalée sur l'axe vertical sur la base d'une somme du troisième produit et du quatrième produit.

5. Procédé de conversion de coordonnées selon l'une quelconque des revendications 2 à 4, dans lequel les au moins deux points de marquage comprennent un premier point de marquage et un deuxième point de marquage, le premier ensemble de coordonnées de point de marquage comprend des premières coordonnées de point de marquage et des deuxièmes coordonnées de point de marquage qui correspondent respectivement au premier point de marquage et au deuxième point de marquage, et le deuxième ensemble de coordonnées de point de marquage comprend des troisièmes coordonnées de point de marquage et des quatrièmes coordonnées de point de marquage qui correspondent respectivement au premier point de marquage et au deuxième point de marquage ; et
la détermination, sur la base du premier ensemble de coordonnées de point de marquage et du deuxième ensemble de coordonnées de point de marquage, de paramètres de conversion de coordonnées entre le système de coordonnées du poste d'adressage et le système de coordonnées du poste de soudage comprend :
la détermination, sur la base des premières coordonnées de point de marquage, des deuxièmes coordonnées de point de marquage, des troisièmes coordonnées de point de marquage et des quatrièmes coordonnées de point de marquage, du paramètre de rotation des coordonnées entre le système de coordonnées du poste d'adressage et le système de coordonnées du poste de soudage ;
l'exécution, sur la base du paramètre de rotation, d'une rotation sur les premières coordonnées de point de marquage autour du point central de rotation pour obtenir les premières coordonnées de point de marquage pivotées ; et
la détermination de troisièmes coordonnées décalées entre les troisièmes coordonnées de point de marquage et les premières coordonnées de point de marquage pivotées comme la quantité de translation de coordonnées entre le système de coordonnées du poste d'adressage et le système de coordonnées du poste de soudage.

6. Procédé de conversion de coordonnées selon la revendication 5, dans lequel le paramètre de rotation comprend un angle de rotation ; et la détermination, sur la base des premières coordonnées de point de marquage, des deuxièmes coordonnées de point de marquage, des troisièmes coordonnées de point de marquage et des quatrièmes coordonnées de point de marquage, du paramètre de rotation des coordonnées entre le système de coordonnées du poste d'adressage et le système de coordonnées du poste de soudage comprend :
la détermination d'une première pente d'une première droite sur la base des premières coordonnées de point de marquage et des deuxièmes coordonnées de point de marquage, la première droite étant une droite définie par le premier point de marquage et le deuxième point de marquage dans le système de coordonnées du poste d'adressage ;
la détermination d'une deuxième pente d'une deuxième droite sur la base des troisième coordonnées de point de marquage et des quatrièmes coordonnées de point de marquage, la deuxième droite étant une droite définie par le premier point de marquage et le deuxième point de marquage dans le système de coordonnées du poste de soudage ; et
la détermination d'un angle inclus entre la première droite et la deuxième droite sur la base de la première et de la deuxième pente, et la détermination de l'angle inclus comme l'angle de rotation.

7. Procédé de conversion de coordonnées selon la revendication 6, dans lequel la détermination d'un angle inclus entre la première droite et la deuxième droite sur la base de la première pente et de la deuxième pente comprend :
la détermination d'une première différence entre la première pente et la deuxième pente, et d'un cinquième produit de la première pente et de la deuxième pente ;
la détermination, sur la base de la première différence et du cinquième produit, d'une valeur de tangente de l'angle inclus entre la première droite et la deuxième droite ; et
la détermination de l'angle inclus sur la base de la valeur de tangente.

8. Procédé de conversion de coordonnées selon l'une quelconque des revendications 1 à 7, dans lequel l'obtention d'un premier ensemble de coordonnées de borne d'au moins une borne d'un produit de batterie à souder dans un système de coordonnées du poste d'adressage comprend :
l'obtention d'un ensemble de coordonnées de référence de l'au moins une borne du produit de batterie par rapport à un point de référence prédéfini dans le système de coordonnées du poste d'adressage, et d'un premier ensemble de coordonnées décalées d'adressage obtenu par une caméra d'adressage au niveau d'un poste d'adressage (10) adressant et photographiant l'au moins une borne, le système de coordonnées du poste d'adressage étant établi avec le point de référence prédéfini comme origine de coordonnées ; et
la détermination, sur la base de l'ensemble de coordonnées de référence et du premier ensemble de coordonnées décalées d'adressage, du premier ensemble de coordonnées de borne de l'au moins une borne dans le système de coordonnées du poste d'adressage.

9. Procédé de conversion de coordonnées selon la revendication 8, dans lequel le point de référence prédéfini est une deuxième borne prédéfinie dans le produit de batterie ; et l'obtention d'un ensemble de coordonnées de référence de l'au moins une borne du produit de batterie par rapport à un point de référence prédéfini dans le système de coordonnées du poste d'adressage comprend :
l'obtention d'une première position à laquelle se trouve la caméra d'adressage lors de l'adressage et de la photographie de la deuxième borne, et d'un ensemble de distances de déplacement, par rapport à la première position, de la caméra d'adressage lors de l'adressage et de la photographie de l'au moins une borne ; et
la détermination, sur la base de l'ensemble des distances de déplacement et des deuxièmes coordonnées décalées d'adressage obtenues par la caméra d'adressage adressant et photographiant la deuxième borne, d'un ensemble de coordonnées de référence de l'au moins une borne par rapport à la deuxième borne.

10. Système de soudage (400), comprenant un contrôleur et un dispositif de soudage (420), **caractérisé en ce que** :
le contrôleur est configuré pour : obtenir un premier ensemble de coordonnées de borne d'au moins une borne d'un produit de batterie à souder dans un système de coordonnées de poste d'adressage (10), et un premier ensemble de coordonnées de point de marquage qui correspond à chacun d'au moins deux points de marquage dans le système de coordonnées du poste d'adressage ; obtenir un deuxième ensemble de coordonnées de point de marquage des au moins deux points de marquage dans un système de coordonnées de poste de soudage ; déterminer, sur la base du premier ensemble de coordonnées de point de marquage et du deuxième ensemble de coordonnées de point de marquage, des paramètres de conversion des coordonnées entre le système de coordonnées du poste d'adressage et le système de coordonnées du poste de soudage ; et effectuer, sur la base des paramètres de conversion, une conversion sur le premier ensemble de coordonnées de borne pour obtenir un deuxième ensemble de coordonnées de borne de l'au moins une borne dans le système de coordonnées du poste de soudage, et envoyer le deuxième ensemble de coordonnées de borne au dispositif de soudage (420), les paramètres de conversion comprenant un paramètre de rotation et une valeur de translation correspondant à un point central de rotation prédéfini ; et
le dispositif de soudage (420) est placé dans un poste de soudage (20) et est configuré pour souder l'au moins une borne sur la base du deuxième ensemble de coordonnées de borne, afin de connecter électriquement au moins deux éléments de batterie dans le produit de batterie au moyen d'une barre omnibus.

11. Système de soudage (400), comprenant un dispositif d'adressage (430), un dispositif de soudage (420), un premier contrôleur (411) et un deuxième contrôleur (412), le dispositif d'adressage (430) et le premier contrôleur (411) étant prévus dans un poste d'adressage (10), le dispositif de soudage (420) et le deuxième contrôleur (412) étant prévus dans un poste de soudage (20), et le poste d'adressage (10) se trouvant en amont du poste de soudage (20), **caractérisé en ce que** :
le premier contrôleur (411) est configuré pour : commander le dispositif d'adressage (430) pour adresser au moins une borne d'un produit de batterie à souder et au moins deux points de marquage, pour obtenir un premier ensemble de coordonnées de borne de l'au moins une borne dans un système de coordonnées du poste d'adressage, et un premier ensemble de coordonnées de point de marquage qui correspond à chacun des au moins deux points de marquage dans le système de coordonnées du poste d'adressage ; et envoyer le premier ensemble de coordonnées de borne et le premier ensemble de coordonnées de point de marquage au deuxième contrôleur (412) ; et
le deuxième contrôleur (412) est configuré pour : commander le dispositif de soudage (420) pour adresser les au moins deux points de marquage, pour obtenir un deuxième ensemble de coordonnées de point de marquage des au moins deux points de marquage dans un système de coordonnées du poste de soudage ; déterminer, sur la base du premier ensemble de coordonnées de point de marquage et du deuxième ensemble de coordonnées de point de marquage, des paramètres de conversion de coordonnées entre le système de coordonnées du poste d'adressage et le système de coordonnées du poste de soudage ; effectuer, sur la base des paramètres de conversion, une conversion sur le premier ensemble de coordonnées de borne pour obtenir un deuxième ensemble de coordonnées de borne de l'au moins une borne dans le système de coordonnées du poste de soudage ; et commander le dispositif de soudage (420) pour souder l'au moins une borne sur la base du deuxième ensemble de coordonnées de borne, pour connecter électriquement au moins deux éléments de batterie dans le produit de batterie au moyen d'une barre omnibus, les paramètres de conversion comprenant un paramètre de rotation et une valeur de translation correspondant à un point central de rotation prédéfini.

12. Système de soudage (400) selon la revendication 11, dans lequel
le premier contrôleur (411) est en outre configuré pour : envoyer une première instruction d'adressage au dispositif d'adressage (430), et obtenir un premier ensemble de coordonnées décalées d'adressage obtenu par le dispositif d'adressage (430) adressant et photographiant l'au moins une borne, et un troisième ensemble de coordonnées décalées d'adressage obtenu en adressant et photographiant les au moins deux points de marquage ; obtenir un ensemble de coordonnées de référence de l'au moins une borne par rapport à un point de référence prédéfini dans le système de coordonnées du poste d'adressage, le système de coordonnées du poste d'adressage étant établi avec le point de référence prédéfini comme origine de coordonnées ; déterminer le premier ensemble de coordonnées de borne sur la base de l'ensemble de coordonnées de référence et du premier ensemble de coordonnées décalées d'adressage ; et déterminer le premier ensemble de coordonnées de point de marquage sur la base de l'ensemble de coordonnées de référence et du troisième ensemble de coordonnées décalées d'adressage ; et
le dispositif d'adressage (430) est configuré pour : en réponse à la première instruction d'adressage, adresser et photographier l'au moins une borne pour obtenir le premier ensemble de coordonnées décalées d'adressage, et adresser et photographier les au moins deux points de marquage pour obtenir le troisième ensemble de coordonnées décalées d'adressage ; et envoyer le premier ensemble de coordonnées décalées d'adressage et le troisième ensemble de coordonnées décalées d'adressage au premier contrôleur (411).

13. Système de soudage (400) selon la revendication 11 ou 12, dans lequel
le deuxième contrôleur (412) est en outre configuré pour : envoyer une deuxième instruction d'adressage au dispositif de soudage (420), et obtenir le deuxième ensemble de coordonnées de point de marquage obtenu par le dispositif de soudage (420) adressant et photographiant les au moins deux points de marquage ; et
le dispositif de soudage (420) est en outre configuré pour : en réponse à la deuxième instruction d'adressage, adresser et photographier les au moins deux points de marquage afin d'obtenir le deuxième ensemble de coordonnées de point de marquage ; et envoyer le deuxième ensemble de coordonnées de point de marquage au deuxième contrôleur (412).

14. Système de soudage (400) selon l'une quelconque des revendications 11 à 13, dans lequel le deuxième contrôleur (412) est en outre configuré pour : envoyer une instruction de soudage au dispositif de soudage (420), l'instruction de soudage portant le deuxième ensemble de coordonnées de borne ; et
le dispositif de soudage (420) est en outre configuré pour : en réponse à l'instruction de soudage, souder l'au moins une borne sur la base du deuxième ensemble de coordonnées de borne, afin de connecter électriquement au moins deux éléments de batterie dans le produit de batterie au moyen d'une barre omnibus.
